(19) Europäisches Patentamt
European Patent Office
Office européen des brevets

(11) EP 2 311 645 A1

(12) **EUROPEAN PATENT APPLICATION**
published in accordance with Art. 153(4) EPC

(43) Date of publication:
**20.04.2011 Bulletin 2011/16**

(21) Application number: **09802825.1**

(22) Date of filing: **03.07.2009**

(51) Int Cl.:
***B41M 5/00*** *(2006.01)* ***B41J 2/01*** *(2006.01)*
***B41M 5/50*** *(2006.01)* ***B41M 5/52*** *(2006.01)*

(86) International application number:
**PCT/JP2009/062227**

(87) International publication number:
**WO 2010/013582 (04.02.2010 Gazette 2010/05)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **30.07.2008 JP 2008196060**

(71) Applicant: **FUJIFILM Corporation**
**Tokyo 106-8620 (JP)**

(72) Inventor: **ONO, Wataru**
**Fujinomiya-shi**
**Shizuoka 418-8666 (JP)**

(74) Representative: **HOFFMANN EITLE**
**Patent- und Rechtsanwälte**
**Arabellastraße 4**
**81925 München (DE)**

# (54) INKJET RECORDING METHOD

(57) An inkjet recording method, comprising: performing recording on an inkjet recording medium having an ink receiving layer, on a support, the ink receiving layer including at least inorganic fine particles, a water-soluble resin and a crosslinking agent, using an ink including at least a dye, water and a water-soluble organic solvent, wherein, in the ink, a content of water-soluble organic solvent, which gives a change ratio of a pore median diameter of the ink receiving layer of 13.0% or less when measured by a mercury intrusion method before and after the water-soluble organic solvent is applied at 6.6 g/$m^2$ to the ink receiving layer, is 40% by mass or greater relative to a total amount of water-soluble organic solvents.



Printed by Jouve, 75001 PARIS (FR)

## Description

Technical Field

The present invention relates to an inkjet recording method.

Background Art

Various information processing systems have been developed concomitantly with the recent rapid progress in the information technology industry, and at the same time, recording methods and recording apparatuses adequate for the respective information processing systems are also being practicalized. Among these, inkjet recording methods are widely utilized due to their advantages that recording can be carried out on various kinds of recording materials, the hardware (apparatus) is relatively inexpensive and compact, and the methods are excellent in quietness. Furthermore, when recording is performed using an inkjet recording method, so-called photograph-like high quality recorded matter may also be obtained.

In recent years, recording media having a porous structure in the layer that receives ink, are being put to practical use. It is believed that the recording media thereby acquire excellent rapid dryability, and excellent glossiness may be obtained.

However, the demand for image quality is ever increasing, so that an inkjet recording medium which is capable of producing more vivid, high quality images (high density) and is also excellent in preservability, is desired.

As a printing method for obtaining high density images, there is disclosed a method of obtaining high density recorded images by defining the pore size of the receiving layer (see, for example, Patent Documents 1 and 2).

However, both patent documents mention only on the pore size of the receiving layer before the printing treatment is performed, and do not describe at all with regard to a recording method of controlling the pore size of the receiving layer after the printing treatment.

Furthermore, as another method for obtaining high density images, investigations on inkjet ink are being conducted in various fields. There are descriptions on the increase in density of printed images based on the content or type of the water-soluble organic solvent contained in the ink (see, for example, Patent Document 3).

As discussed above, extensive investigations have been carried out on the inkjet recording methods capable of obtaining high density recorded images, but in recent years, the demand for image quality is even further increasing, so that an image quality with higher density is requested.

Patent Document 1: Japanese Patent Application Laid-Open (JP-A) No. 2000-247022
Patent Document 2: JP-A No. 2006-181954
Patent Document 3: JP-ANo. 2005-336489

Disclosure of the invention

Problem to be Solved by the Invention

Furthermore, in addition to the performance in connection with image quality, there is a problem, which is characteristic to inkjet recording systems, that because the color change over time immediately after printing, some time is required until a formed image is stabilized. Furthermore, it has been obvious, particularly in the case where the recorded image immediately after printing is not sufficiently dried, that there are occasions in which, when an object such as another recording material is superimposed on a part of this recorded image, the color of the recorded image in the overlapped area is different from the color in the unoverlapped area (that is, occasions in which overlapping traces occur).

It is an object of the invention to provide an inkjet recording method which is capable of obtaining vivid high-density recorded images, and is capable of highly suppressing the color change starting immediately after printing.

Means for Solving the Problem

The inventors of the invention conducted a thorough investigation on the object described above, and as a result, they found a noticeable improving effect in which vivid high-density recorded images are obtained, and the color change starting immediately after printing is suppressed, when a printing treatment is carried out using an inkjet ink containing a particular water-soluble organic solvent in a particular amount, and the change ratio of a pore median diameter of the ink receiving layer occurring before and after printing,.

<1>

An inkjet recording method, comprising: performing recording on an inkjet recording medium having an ink receiving layer, on a support, the ink receiving layer including at least inorganic fine particles, a water-soluble resin and a crosslinking agent, using an ink including at least a dye, water and a water-soluble organic solvent, wherein, in the ink, a content of water-soluble organic solvent, which gives a change ratio of a pore median diameter of the ink receiving layer of 13.0% or less when measured by a mercury intrusion method before and after the water-soluble organic solvent is applied at 6.6 $g/m^2$ to the ink receiving layer, is 40% by mass or greater relative to a total amount of water-soluble organic solvents.

<2>

The inkjet recording method of <1>, wherein a particle diameter of the inorganic fine particles of the ink receiving layer measured with an electron microscope is from 5 nm to 45 nm.

<3>

The inkjet recording method of <1 >, wherein the water-soluble resin is polyvinyl alcohol.

<4>

The inkjet recording method of any one of <1> to <3>, wherein the water-soluble organic solvent in the ink is at least one selected from ethylene glycol monoalkyl ether, diethylene glycol monoalkyl ether, propylene glycol monoalkyl ether, dipropylene glycol monoalkyl ether, 1,2-alkyldiol, ethylene glycol dialkyl ether, diethylene glycol dialkyl ether, triethylene glycol dialkyl ether, propylene glycol dialkyl ether, dipropylene glycol dialkyl ether, and tripropylene glycol dialkyl ether.

Effect of the Invention

According to the invention, an inkjet recording method which is capable of obtaining vivid high-density recorded images and is capable of highly suppressing the color change starting immediately after printing, may be provided.

Best Mode for Carrying out the Invention

Hereinafter, an inkjet recording method of the invention will be specifically explained.
The inkjet recording method of the invention includes performing recording (hereinafter, also referred to as "printing") on an inkjet recording medium having an ink receiving layer, on a support, including at least inorganic fine particles, a water-soluble resin and a crosslinking agent, using an ink including at least a dye, water and a water-soluble organic solvent, wherein, in the ink, a content of water-soluble organic solvent, which gives a change ratio of 13.0% or less with regard to the pore median diameter of the ink receiving layer when measured by a mercury intrusion method before and after the water-soluble organic solvent is applied at 6.6 $g/m^2$ to the ink receiving layer, is 40% by mass or greater relative to a total amount of water-soluble organic solvents.
According to the inkjet recording method of the invention, vivid high-density recorded images may be obtained, and recorded images that are capable of highly suppressing the color change starting immediately after printing, may be provided.

<Ink>

The ink according to the invention contains at least a dye, water and a water-soluble organic solvent, and may optionally contain other components.
Furthermore, the ink according to the invention may be at least one selected from the group consisting of yellow ink, magenta ink, cyan ink and black ink, and may also be constituted to include these inks as combined ink sets. Hereinafter, the various components contained in the ink according to the invention will be described.

(Water-soluble organic solvent)

The ink contains a water-soluble organic solvent, and the content ratio of the water-soluble organic solvent (hereinafter, also referred to as "particular water-soluble organic solvent") in a total amount of water-soluble organic

solvents is required to be maintained at 40% by mass or more.
Here, the tem water-soluble organic solvent means a water-soluble compound that dissolves in water at a concentration of 1% by mass or greater.
The particular water-soluble organic solvent is a solvent in which, when the particular water-soluble organic solvent is applied in an amount of 6.6 g/m$^2$ to the ink receiving layer, the change ratio of the pore median diameter of the ink receiving layer measured by a mercury intrusion method before and after the particular water-soluble organic solvent being applied, is 13.0 % or less.

Here, the "mercury intrusion method" is a method utilizing the fact that the surface tension of mercury is high. The method includes adding pressure so as to allow mercury to penetrate into the pores of a powder, and determining the specific surface area or the pore distribution from the pressure and the amount of mercury intruded. When any change in the surface of the mercury liquid level (that is, the amount of mercury intrusion into pores) is detected while the applied pressure is continuously increased, the size and volume of the pores at the sample surface may be measured.

The median diameter of the voids in the ink receiving layer, measured by this mercury intrusion method, has the same definition as the capillary diameter (double of r of formula 1) in the (formula 1) basic formula for liquid penetration (Lucas-Washburn formula). Therefore, when the median diameter is increased, the time for ink absorption is shortened.

$$t = (2h^2 \times \eta)/(\gamma \times r \times \cos\theta) \qquad \text{(Formula 1)}$$

t: Penetration time
h: Penetration depth of liquid
$\eta$: Viscosity of liquid
$\gamma$: Surface tension of liquid
r: Capillary radius
$\theta$: Contact angle of liquid

The inventors of the present invention conducted an investigation, and as a result, it was found that the change ratio of the pore median diameter before and after recording is affected mostly by the "water-soluble organic solvent and water" contained in the ink used for recording. Accordingly, measurement of the pore median diameter before and after recording is carried out with a sample prepared by applying an aqueous solution of the water-soluble organic solvent diluted with water on the ink receiving layer.

When the measurement is made by a mercury intrusion method of the ink receiving layer, it is preferable to carry out the application of the water-soluble organic solvent in an amount of application of 5 to 8 g/m$^2$. in view of the correspondence between the print density or the color change starting immediately after printing and the performance. According to the invention, a value obtained by setting the amount of application of the water-soluble organic solvent at 6.6 g/m$^2$. is employed. In order to set the amount of application of the water-soluble organic solvent, it is preferable to carry out the application after diluting the water-soluble organic solvent with water to 15% by mass to 40% by mass.
Furthermore, in regard to the measurement of mercury intrusion, since drying is insufficient at a time point immediately after the water-soluble organic solvent (including water) is applied on the ink receiving layer, the measurement needs to be performed after the water-soluble organic solvent (including water) is applied and left to stand for 24 hours in an environment at a temperature of 25°C and a humidity of 50% RH. It is sufficient to perform the measurement after 24 hours, and according to the invention, standing for 24 hours is employed.

As discussed above, the pore median diameter of the ink receiving layer before the application of the water-soluble organic solvent is the value of pore size of the ink receiving layer when measured by a mercury intrusion method before the water-soluble organic solvent is applied on the ink receiving layer, and the pore median diameter of the ink receiving layer after the application of the water-soluble organic solvent is the value of pore size of the ink receiving layer when measured by a mercury intrusion method after the water-soluble organic solvent is applied in an amount of 6.6 g/m$^2$ to the ink receiving layer and left to stand for 24 hours.

Furthermore, in order to obtain recorded images that are excellent in the print density or color change without deteriorating bronzing, the pore median diameter before recording is preferably 5 to 40 nm, more preferably 8 to 35 nm, and even more preferably 10 to 30 nm.

In regard to the change ratio of the pore median diameter of the ink receiving layer when measured before and after application, which is measured by a mercury intrusion method, it is needed to use a particular water-soluble organic solvent which gives a change ratio of from 0% to 13.0%, preferably from 0% to 10%, more preferably from 0% to 7%, and even more preferably from 0% to 5%.

As such, when particular water-soluble organic solvent which gives the change ratio of the pore median diameter when measured before and after recording is used in the range described above, recorded images with excellent image

quality, which have high print density and have less color change starting immediately after printing, may be obtained.

Specific measurement of the pore median diameter of the ink receiving layer according to a mercury intrusion method is achieved as follows.

A particular water-soluble organic solvent is diluted with water, and the dilution is applied on the sheet for inkjet recording using an applicator such that the amount of application of the particular water-soluble organic solvent is 6.6 g/m$^2$.

The sheet for inkjet recording after application and the sheet for inkjet recording before application are stored for 24 hours in an environment of 25°C and 50% RH, and measurement of the pore size distribution (pore median diameter before application: L2, pore median diameter after application: L3) is carried out using 9220 (trade name, manufactured by Shimadzu Autopore Corp.) at an initial air pressure of about 20 kPa.

Measurement of the pore size distribution is also carried out in the same manner with the support only, which does not have the ink receiving layer applied thereon (pore median diameter of support: L1). The change ratio (%) of the pore median diameter of the ink receiving layer is determined by the following formula, by subtracting from the pore size distribution of the sheet for inkjet recording.

$$\text{Change ratio of pore median diameter of ink receiving layer (\%)} = ((L3 - L1)/(L2 - L1)) \times 100 - 100$$

Examples of the water-soluble organic solvent include alcohols (for example, methanol, ethanol, propanol, isopropanol, butanol, isobutanol, see-butanol, t-butanol, pentanol, hexanol, cyclohexanol and benzyl alcohol),

polyhydric alcohols (for example, ethylene glycol, diethylene glycol, triethylene glycol, polyethylene glycol, propylene glycol, dipropylene glycol, polypropylene glycol, butylene glycol, hexanediol, pentanediol, glycerin, hexanetriol, and thiodiglycol),

glycol derivatives (for example, ethylene glycol monomethyl ether, ethylene glycol monoethyl ether, ethylene glycol monobutyl ether, diethylene glycol monomethyl ether, diethylene glycol monobutyl ether, propylene glycol monomethyl ether, propylene glycol monobutyl ether, dipropylene glycol monomethyl ether, Triethylene glycol monomethyl ether, ethylene glycol diacetate, ethylene glycol monoethyl ether acetate, triethylene glycol monomethyl ether, triethylene glycol monoethyl ether, and ethylene glycol monophenyl ether),

amines (for example, ethanolamine, diethanolamine, triethanolamine, N-methyldiethanolamine, N-ethyldiethanolamine, morpholine, N-ethylmorpholine, ethylenediamine, diethylenetriamine, triethylenetetramine, polyethyleneimine, and tetramethylpropylenediamine), and other polar solvents (for example, formamide, N,N-dimethylformamide, N,N-dimethylacetamide, dimethyl sulfoxide, sulfolane, 2-pyrrolidone, N-methyl-2-pyrrolidone, N-vinyl-2-pyrrolidone, 2-oxazolidone, 1,3-dimethyl-2-imidazolidinone, acetonitrile, and acetone).

The water-soluble organic solvent may be used singly, or two or more kinds thereof may be used in combination, In a case where two or more of the water-soluble organic solvent are used, each of the two or more water-soluble organic solvents satisfies the condition that, when the water-soluble organic solvent is applied in an amount of 6.6 g/m$^2$, the change ratio of the pore median diameter is 13.0% or less.

In regard to the water-soluble organic solvent (particular water-soluble organic solvent), among those water-soluble organic solvents, one or more selected from 1,2-alkyldiol, (mono-, di-)ethylene glycol monoalkyl ether, (mono-, di-)propylene glycol monoalkyl ether, (mono-, di-, tri-)ethylene glycol dialkyl ether, and (mono-, di-, tri-)propylene glycol dialkyl ether, are preferred, and it is preferable to have these water-soluble organic solvents contained at a proportion of 40% by mass or greater in the total amount of water-soluble organic solvents, from the viewpoint of print density and color change.

It is necessary to have the particular water-soluble organic solvent contained at a proportion of 40% by mass or greater in the total amount of water-soluble organic solvents, but it is more preferable to have the particular water-soluble organic solvent at a proportion of from 60% by mass to 100% by mass, even more preferably from 70 by mass to 100% by mass, and particularly preferably from 85% by mass to 100% by mass.

The 1,2-alkyldiol preferably has an alkyl group having 2 to 6 carbon atoms, and from the viewpoint of print density, more preferably has an alkyl group having 2 to 3 carbon atoms. Specific examples include ethylene glycol and 1,2-propanediol.

The (mono-, di-)ethylene glycol monoalkyl ether and (mono-, dipropylene glycol monoalkyl ether preferably have an alkyl group having 1 to 5 carbon atoms, and more preferably 1 to 4 carbon atoms, from the viewpoint of print density.

The (mono-, di-, tri-)ethylene glycol dialkyl ether and (mono-, di-, tri-)propylene glycol dialkyl ether preferably have an alkyl group having 1 to 3 carbon atoms, and more preferably one carbon atom, in order to realize high print density without impairing the solubility in the ink.

Among the water-soluble organic solvents, ethylene glycol monomethyl ether, ethylene glycol monoethyl ether, ethylene glycol monobutyl ether, propylene glycol monomethyl ether, propylene glycol monoethyl ether, propylene glycol

monobutyl ether, (mono-, di-, tri-)ethylene glycol dimethyl ether, and (mono-, di-, tri-)propylene glycol dimethyl ether are particularly preferred.

The content of the water-soluble organic solvent in the ink according to the invention is preferably from 3% by mass to 50% by mass, more preferably from 5% by mass to 40% by mass, even more preferably from 5% by mass to 30% by mass, and particularly preferably from 7% by mass to 25% by mass, from the viewpoint of suppressing the color change and obtaining vivid high-density images.

(Dye)

The ink according to the invention further contains at least one dye, in addition to the water-soluble organic solvent.

Any common dye that is available for inkjet use may be used as the dye. Examples of the dye are classified into acidic dyes, direct dyes, reactive dyes, vat dyes, sulfide dyes and food dyes according to the Color Index, but in addition to those, other dyes that are classified into oil-soluble dyes, basic dyes and the like may also be used.

Examples of the dye according to the invention include azo dyes, azomethine dyes, xanthene dyes, and quinone dyes.

The dye according to the invention is preferably a water-soluble dye, from the viewpoint of suppressing the ink viscosity and forming vivid images. Here, the water-soluble dye means a dye that dissolves in an amount of 0.2 g or more in 100 ml of an aqueous solvent (25°C).

Specific dye compounds will be presented below. However, the invention is not intended to be limited to these exemplary compounds.

[C.I.Acid Yellow]

1,3, 11, 17, 18, 19,23,25,36,38,40,42,44,49,59,61,65,67,72,73,79,99,104, 110, 114, 116, 118, 121, 127, 129, 135, 137, 141, 143, 151, 155, 158, 159, 169, 176, 184, 193, 200, 204, 207, 215, 219, 220, 230, 232, 235, 241, 242, 246

[C.I. Acid Orange]

3, 7, 8, 10, 19, 24, 51, 56, 67, 74, 80, 86, 87, 88, 89, 94, 95, 107, 108, 116, 122, 127, 140,142,144,149,152,156,162,166,168

[C.I. Acid Red]

1, 6, 8, 9, 13, 18, 27, 35, 37, 52, 54, 57, 73, 88, 97, 106, 111, 114, 118, 119,127,131, 138, 143, 145, 151, 183, 195, 198, 211, 215, 217, 225, 226, 249, 251, 254, 256, 257, 260, 261, 265, 266, 274, 276, 277, 289, 296, 299, 315, 318, 336, 337, 357, 359, 361, 362, 364, 366, 399, 407, 415

[C.I. Acid Violet]

17, 19, 21, 42, 43, 47, 48, 49, 54, 66, 78, 90, 97, 102, 109, 126

[C.I. Acid Blue]

1, 7, 9, 15, 23, 25, 40, 62, 72, 74, 80, 83, 90, 92, 103, 104, 112, 113, 114, 120, 127, 128, 129, 138, 140, 142, 156, 158, 171, 182, 185, 193, 199, 201 , 203, 204, 205, 207, 209, 220, 221, 224, 225, 229, 230, 239, 249, 258, 260, 264, 278, 279, 280, 284, 290, 296, 298, 300, 317, 324, 333, 335, 338, 342, 350

[C.I. Acid Green]

9,12, 16, 19, 20, 25, 27, 28, 40, 43, 56, 73, 81, 84, 104, 108, 109

[C.I. Acid Brown]

2, 4, 13, 14, 19, 28, 44, 123, 224, 226, 227, 248, 282, 283, 289, 294, 297, 298, 301, 355, 357, 413

[C.I. Acid Black]

1, 2, 3, 24, 26, 31, 50, 52, 58, 60, 63, 107, 109, 112, 119, 132, 140, 155, 172, 187, 188, 194, 207, 222

[C.I. Direct Yellow]

8, 9, 10, 11, 12, 22, 27, 28, 39, 44, 50, 58, 79, 86, 87, 98, 105, 106, 130, 132, 137, 142, 147, 153

[C.I. Direct Orange]

6, 26, 27, 34, 39, 40, 46, 102, 105, 107, 118

[C.I. Direct Red]

2, 4, 9, 23, 24, 31, 54, 62, 69, 79, 80, 81, 83, 84, 89, 95, 212, 224, 225, 226, 227, 239, 242, 243, 254

[C.I. Direct Violet]

9, 35, 51, 66, 94, 95

[C.I. Direct Blue]

1, 15, 71, 76, 77, 78, 80, 86, 87, 90, 98,106, 108, 160, 168, 189, 192, 193, 199, 200, 201, 202, 203, 218, 225, 229, 237, 244, 248, 251, 270, 273, 274, 290, 291

[C.I. Direct Green]

26, 28, 59, 80, 85

[C.I. Direct Brown]

44, 106, 115, 195, 209, 210, 222, 223

[C.I. Direct Black]

17, 19, 22, 32, 51, 62, 108, 112, 113, 117, 118, 132, 146, 154, 159, 169

[C.I. Basic Yellow]

1, 2, 11, 13, 15, 19, 21, 28, 29, 32, 36, 40, 41, 45, 51, 63, 67, 70, 73, 91

[C.I. Basic Orange]

2, 21, 22

[C.I. Basic Red]

1, 2, 12, 13, 14, 15, 18, 23, 24, 27, 29, 35, 36, 39, 46, 51, 52, 69, 70, 73, 82, 109

[C.I. Basic Violet]

1, 3, 7, 10, 11, 15, 16, 21, 27, 39

[C.I. Basic Blue]

1, 7, 9, 21, 22, 26, 41, 45, 47, 52, 54, 65, 69, 75, 77, 92, 100, 105, 117, 124, 129, 147, 151

[C.I. Basic Green]

1,4

[C.I. Basic Brown]

I

[C.I. Reactive Yellow]

2, 3, 7, 15, 17, 18, 22, 23, 24, 25, 27, 37, 39, 42, 57, 69, 76, 81, 84, 85, 86, 87, 92, 95, 102, 105, 111, 125, 135, 136, 137, 142, 143, 145, 151, 160, 161, 165, 167, 168, 175, 176

[C.I. Reactive Orange]

1, 4, 5, 7, 11, 2, 13, 15, 16, 20, 30, 35, 56, 64, 67, 69, 70, 72, 74, 82, 84, 86, 87, 91, 92, 93, 95, 107

[C.I. Reactive Red]

2, 3, 5, 8, 11, 21, 22, 23, 24, 28, 29, 31, 33, 35, 43, 45, 49, 55, 56, 58, 65, 66, 78, 83, 84, 106, 111, 312, 113, 114, 116, 120, 123, 124, 128, 130, 136, 141, 147, 158, 159, 171, 174, 180,183, 184, 187, 190, 193, 194, 195, 198, 218, 220, 222, 223, 228, 235

[C.I. Reactive Violet]

1, 2, 4, 5, 6, 22, 23, 33, 36, 38

[C.I. Reactive Blue]

2, 3, 4, 5, 7, 13, 14, 15, 19, 21, 25, 27, 28, 29, 38, 39, 41, 49, 50, 52, 63, 69, 71, 72, 77, 79, 89, 104, 109, 112, 113, 114, 116, 119, 120, 122, 137, 140, 143, 147, 160, 161, 162, 163, 168, 171, 176, 182, 184, 191, 194, 195, 198, 203, 204, 207, 209, 211, 214, 220, 221, 222, 231, 235, 236

[C.I. Reactive Green]

8, 12, 15, 19, 21

[C.I. Reactive Brown]

2, 7, 9, 10, 11, 17, 18, 19, 21, 23, 31, 37, 43, 46

[C.I. Reactive Black]

5, 8, 13, 14, 31, 34, 39

[C.I. Food Black]

1,2

Furthermore, the dyes described below are also suitable as the magenta dye, cyan dye, black dye and yellow dye that may be used in the ink according to the invention.
That is, examples of the magenta dye that may be used in the ink according to the invention include, but not limited to, aryl- or heterylazo dyes having phenols, naphthols, anilines and the like as coupler components; azomethine dyes having pyrazolones, pyrazolotriazoles and the like as coupler components; methine dyes such as arylidene dyes, styryl dyes, merocyanine dyes, cyanine dyes and oxonol dyes; carbonium dyes such as diphenylmethane dyes, triphenylmethane dyes and xanthene dyes; quinone dyes such as naphthoquinone, anthraquinone and anthrapyridone; and fused polycyclic dyes such as dioxazine dyes.
The magenta dye is preferably a heterocyclic azo dye, and those described in PCT International Patent Application Publication No. WO 2002/83795 (pages 35 to 55) and WO 2002-83662 (pages 27 to 42), JP-A No. 2004-149560

(paragraphs [0046] to [0059]), and JP-A No. 2004-149561 (paragraphs [0047] to [0060]) are more preferred from the viewpoint of ozone resistance.

Examples of the cyan dye that may be used in the ink according to the invention include, but not limited to, aryl- or heterylazo dyes having phenols, naphthols, anilines and the like as coupler components; azomethine dyes having heterocyclic compounds such as phenols, naphthols and pyrrolotriazole as coupler components; polymethine dyes such as cyanine dyes, oxonol dyes and merocyanine dyes; carbonium dyes such as diphenylmethane dyes, triphenylmethane dyes and xanthene dyes; phthalocyanine dyes; anthraquinone dyes; and indigo and thioindigo dyes.

As associative phthalocyanine dyes, those described in PCT International Patent Application Publication No. WO 2002/60994, WO 2003/811 and WO 2003/62324, JP-A No. 2003-213167, JP-A No. 2004-75986, JP-A No. 2004-323605, JP-A No. 2004-315758, JP-A No. 2004-315807 and JP-A No. 2005-179469 are more preferred from the viewpoint of ozone resistance.

Examples of the black dye that may be used in the ink according to the invention include disazo, trisazo and tetraazo dyes. These black dyes may be used in combination with pigments such as a dispersion of carbon black.

Preferred examples of the black dye, which have excellent ozone resistance, are described in detail in JP-A No. 2005-307177.

Examples of the yellow dye that may be used in the ink according to the invention include those described in PCT International Patent Application Publication No. WO 2005/075573, JP-A No. 2004-83903 (paragraphs [0024] to [0062]), JP-A No. 2003-277661 (paragraphs [0021] to [0050]), JP-A No. 2003-277262 (paragraphs [0042] to [0047]), JP-A No. 2003-128953 (paragraphs [0025] to [0076]), JP-A No. 2003-41160 (paragraphs [0028] to [0064]), US Patent Application Publication No. US 2003/0213405 (paragraph [0108]); as well as C.I. Direct Yellow 8, 9, 11, 12, 27, 28, 29, 33, 35, 39, 41, 44, 50, 53, 59, 68, 86, 87, 93, 95, 96, 98, 100, 106, 108, 109, 110, 130, 132, 142, 144, 161 and 163; C, I. Acid Yellow 17, 19, 23, 25, 39, 40, 42, 44, 49, 50, 61, 64, 76, 79, 110, 127, 135, 143, 151, 159, 169, 174, 190, 195, 196,197, 199,218, 219, 222 and 227; C.I. Reactive Yellow 2, 3,13,14,15, 17, 18, 23, 24,25, 26, 27, 29, 35, 37, 41 and 42; and C.I. Basic Yellow 1, 2, 4, 11,13, 14, 15, 19, 21, 23, 24, 25, 28, 29, 32, 36, 39 and 40. Furthermore, the yellow dyes described in paragraphs [0013] to [0112] and [0114] to [0121] of JP-ANo. 2007-191650 are also preferred from the viewpoint of ozone resistance.

The content ratio of the dye contained in the ink according to the invention is preferably 0.5% by mass to 30% by mass, and more preferably 1.0% by mass to 15% by mass. When the content is adjusted to 0.5% by mass or greater, a satisfactory print density is obtained. Furthermore, when the content ratio is adjusted to 30% by mass or less, an increase in the ink viscosity or the occurrence of structural consistency in the viscosity characteristics may be suppressed, and thus a satisfactory ejection stability of ink from the inkjet head is obtained.

The ink according to the invention may appropriately use other components as necessary in addition to the components described above, and the ink may contain those components that may be contained in common inks, to the extent of not impairing the effects of the invention.

The most preferred aspect of the ink according to the invention is a combination in which the water-soluble organic solvent is one or more selected from ethylene glycol monoethyl ether, ethylene glycol monoethyl ether, ethylene glycol monobutyl ether, propylene glycol monomethyl ether, propylene glycol monomethyl ether, propylene glycol monobutyl ether (mono-, di-, tri-)ethylene glycol dimethyl ether, and (mono-, di-, tri-)propylene glycol dimethyl ether, and its content ratio (%) is from 85% by mass to 100% by mass in the total amount of water-soluble organic solvents.

<Inkjet recording medium>

The inkjet recording medium according to the invention is a medium having an ink receiving layer including at least inorganic fine particles, a water-soluble resin and a crosslinking agent provided on a support, and the medium may optionally have additional layers.

(Water-soluble resin)

The ink receiving layer according to the invention contains a water-soluble resin.

According to the invention, the "water-soluble resin" means a resin having a solubility in water at normal temperature (25°C) of 10 g/100 g or greater.

Examples of the water-soluble resin include a polyvinyl alcohol-based resin which is a resin having a hydroxyl group as a hydrophilic structural unit [polyvinyl alcohol (PVA), acetoacetyl-modified polyvinyl alcohol, cationically modified polyvinyl alcohol, anionically modified polyvinyl alcohol, silanol-modified polyvinyl alcohol, polyvinyl acetal, or the like], a cellulose-based resin [methyl cellulose (MC), ethyl cellulose (EC), hydroxyethyl cellulose (HEC), carboxymethyl cellulose (CMC), hydroxypropyl cellulose (HPC), hydroxyethylmethyl cellulose, hydroxypropylmethyl cellulose, or the like], a chitin, a chitosan, starch, a resin having an ether bond [polyethylene oxide (PEO), polypropylene oxide (PPO), polyethylene glycol (PEG), polyvinyl ether (PVE), or the like], and a resin having a carbamoyl group [polyacrylamide (PAAM), polyvinylpyrrolidone (PVP), polyacrylic acid hydrazide, or the live]. Furthermore, a polyacrylate having a carboxyl group as a dissociable group, a maleic acid resin, an alginate, a gelatin, and the like may also be used.
Among those described above, a polyvinyl alcohol-based resin is preferred, and particularly polyvinyl alcohol is preferred.
The content of the water-soluble resin is preferably 9% by mass to 40% by mass, and more preferably 12% by mass to 33% by mass, relative to the total solids mass of the ink receiving layer, from the viewpoint of preventing a decrease in the film strength or cracking during drying, which may be caused by an excessively small content, and from the viewpoint of preventing a decrease in ink absorbability, which may be caused by a decrease in porosity as a result of an excessively large content of the resin causing the pores to become susceptible to blocking by the resin.
The water-soluble resin described above and the fine particles that will be described below, which mainly constitute the ink receiving layer, may be respectively constituted of a single material, or may be mixtures of plural materials.
The polyvinyl alcohol-based resin preferably has a number average degree of polymerization of 1800 or higher, and more preferably 2000 or higher, from the viewpoint of preventing cracking. When the water-soluble resin is used in combination with silica fine particles, the type of the water-soluble resin is important from the viewpoint of transparency. Particularly in the case of using anhydrous silica, it is preferable to use a polyvinyl alcohol-based resin as the water-soluble resin, and among others, a polyvinyl alcohol-based resin having a degree of saponification of 70% to 99% is more preferred.
Examples of the polyvinyl alcohol-based resin also include the derivatives of the specific examples listed above, and the polyvinyl alcohol-based resin may be used singly, or two or more kinds may also be used in combination.
The polyvinyl alcohol-based resin described above has a hydroxyl group in its structural unit, and this hydroxyl group and the silanol group at the surface of silica fine particles form hydrogen bonding, making it easier to form a three-dimensional network structure which has the secondary particles of the silica fine particles as chain units. It is thought that when such a three-dimensional network structure is formed, an ink receiving layer having a porous structure with high porosity may be formed.
In regard to the inkjet recording medium, the porous ink receiving layer obtained as explained above may rapidly absorb ink by the capillary phenomenon and form dots of satisfactory circularity, without ink bleeding.

(Inorganic fine particles)

The ink receiving layer according to the invention contains inorganic fine particles (hereinafter, also referred to as "fine particles").
Examples of the inorganic fine particles include silica fine particles, colloidal silica, titanium dioxide, barium sulfate, calcium silicate, zeolite, kaolinite, halloysite, mica, talc, calcium carbonate, magnesium carbonate, calcium sulfate, alumina fine particles, boehmite, and pseudoboehmite. Among them, silica fine particles, colloidal silica, alumina fine particles and pseudoboehmite are preferred, and particularly, gas phase method silica fine particles are preferred.
Since the silica fine particles have a particularly large specific surface area, the fine particles have high ink absorbability and a high retention efficiency. Furthermore, since the silica fine particles have a low refractive index, there are advantages that when dispersion is carried out to achieve an appropriate microparticle size, the ink receiving layer may be imparted with transparency, and high color density and satisfactory color developing properties are obtained. It is important that the ink receiving layer is transparent as such not only from the viewpoint of applications where transparency is required, such as OHPs, but also from the viewpoint of obtaining high color density and satisfactory color developing properties and glossiness even in the case of applying the ink receiving layer to recording media such as photographic glossy paper.
The particle diameter of the inorganic fine particles means the particle diameter measured when the ink receiving layer of an inkjet recording medium obtained is observed with an electron microscope.
The particle diameter of the inorganic fine particles measured by observing the ink receiving layer with an electron microscope is preferably from 5 nm to 45 nm, more preferably from 5 nm to 35 nm, and particularly preferably from 10 nm to 30 nm. When the particle diameter is from 5 nm to 45 nm, high density recorded images may be obtained without deteriorating the performance such as bronzing or gloss, and the color change starting immediately after printing may be suppressed to a significant extent.
The average primary particle diameter of each of the inorganic fine particles is preferably 20 nm or less, more preferably 15 nm or less, and particularly preferably 10 nm or less. When the average primary particle diameter is 20 nm or less, the ink absorbing properties may be effectively enhanced, and at the same time, the glossiness of the ink receiving layer surface may also be increased.
Particularly, since silica fine particles have silanol groups at the surface, and the particles easily adhere to each other due to the hydrogen bonding of the silanol groups, and because of the effect of adhesion between the particles mediated by the silanol groups and the water-soluble resin, when the average primary particle diameter is 20 nm or less as described above, the porosity of the ink receiving layer is high, and a structure with high transparency may be formed, so that the ink absorbing properties may be effectively enhanced.

In general, silica fine particles are usually roughly classified into wet method particles and dry method (gas phase method) particles, based on the production method. In the wet methods, a method of producing active silica through acidolysis of silicate, and subjecting this active silica to appropriate polymerization and aggregation precipitation to obtain hydrated silica, constitutes the mainstream. On the other hand, in the gas phase methods, a method based on high temperature gas phase hydrolysis of silicon halide (flame hydrolysis method), and a method of subjecting silica sand and cokes to heating, reduction and vaporization by an arc in an electrical furnace, and oxidizing the resultant in air (arc method) to obtain anhydrous silica, constitute the main stream.

The gas phase method silica (anhydrous silica fine particles obtained according to a gas phase method) is different from the hydrated silica in terms of the density of silanol groups at the surface, the presence or absence of voids, and the like, and exhibit different properties. However, the gas phase method silica is suitable for forming a three-dimensional structure having high porosity. Although the reason is not clearly known, in the case of hydrated silica, the density of silanol groups at the surfaces of the fine particles is as high as 5 to 8 groups/$nm^2$, so that the silica fine particles are likely to form compact aggregates (aggregates). On the other hand, in the case of gas phase method silica, it is speculated that since the density of silanol groups at the surfaces of the fine particles is as low as 2 to 3 groups/$nm^2$, the silica fine particles form sparse soft aggregates (flocculates), and consequently, a structure with high porosity is obtained.

According to the invention, gas phase method silica fine particles (anhydrous silica) that are obtainable by the dry methods are preferred, and silica fine particles having a density of silanol groups at the surfaces of the fine particles of 2 to 3 groups/$nm^2$ are more preferred.

<<Content ratio of fine particles and water-soluble resin (PB ratio)>>

The content ratio of the fine particles (preferably, silica fine particles; x) and the water-soluble resin (y) [PB ratio (x/y), mass of the fine particles relative to 1 part by mass of the water-soluble resin] significantly affects the film structure of the ink receiving layer as well. That is, when the PB ratio increases, the porosity, pore volume and surface area (per unit mass) are also increased.

Specifically, since there are occasions in which stress is added when the inkjet recording medium passes through the conveyance system of an inkjet printer, the ink receiving layer is required to have sufficient film strength. Furthermore, in the case of cutting the inkjet recording medium into a sheet form, the ink receiving layer is required to have sufficient film strength also for the prevention of cracking and peeling of the ink receiving layer. Therefore, the PB ratio (x/y) is preferably 4.5 or less from the viewpoint of increasing the hardness of the ink receiving layer. Furthermore, the PB ratio is more preferably 4.3 or less, and particularly preferably 4.15 or less.

Although there are no particular limitations, from the viewpoint of preventing a decrease in ink absorbability, which may be caused by a decrease in porosity as a result of an excessively large content of the resin causing the pores to become susceptible to blocking by the resin, the PB ratio is preferably 1.5 or greater, and from the viewpoint of securing high speed ink absorbability in inkjet printers, the PB ratio is preferably 2 or greater.

For example, when a coating liquid prepared by completely dispersing anhydrous silica fine particles having an average primary particle diameter of 20 nm or less and a water-soluble resin in an aqueous solution at a PB ratio (x/y) of 2 to 4.5, is applied on a support, and the coated layer is dried, a three-dimensional network structure having the secondary particles of the silica fine particles as chain units is formed, and a light-transmissive porous film having an average pore size of 30 nm or less, a porosity of 50% to 80%, a pore volume of 0.5 ml/g or greater, and a specific surface area of 100 $m^2$/g or greater, may be easily formed.

(Crosslinking agent)

According to a preferred aspect in regard to the ink receiving layer according to the invention, the layer containing the water-soluble resin and the like is a porous layer which further contains a crosslinking agent that is capable of crosslinking the water-soluble resin, and is cured by a crosslinking reaction of the water-soluble resin brought by the crosslinking agent. Addition of a crosslinking agent leads to the crosslinking of the water-soluble resin, and thus an ink receiving layer with high hardness may be obtained.

For the crosslinking agent, a crosslinking agent suitable in terms of the relationship with the water-soluble resin contained in the ink receiving layer may be appropriately selected; however, inter alia, a boron compound is preferred from the viewpoint that the crosslinking reaction occurs rapidly, and examples thereof include borax, boric acid, borates (for example, ortho-borate, $InBO_3$, $ScBO_3$, $YBO_3$, $LaBO_3$, $Mg_3(BO_3)_2$, $Co_3(BO_3)_2$), diborates (for example, $Mg_2B_2O_5$, $Co_2B_2O_5$), metaborates (for example, $LiBO_2$, $Ca(BO_2)_2$, $NaBO_2$, $KBO_2$), tetraborates (for example, $Na_2B_4O_7 \cdot 10H_2O$), and pentaborates (for example, $KB_5O_8 \cdot 4H_2O$, $Ca_2B_6O_{11} \cdot 7H_2O$, $CsB_5O_5$). Among them, borax, boric acid and borates are preferred from the viewpoint of being capable of rapidly triggering the crosslinking reaction, and particularly boric acid is preferred. It is most preferable to use this boric acid in combination with polyvinyl alcohol, which is a water-soluble

resin.

Furthermore, suitable examples of the crosslinking agent for polyvinyl alcohol may also include the following compounds, in addition to the boron compounds.

Examples include aldehyde-based compounds such as formaldehyde, glyoxal and glutaraldehyde; ketone-based compounds such as diacetyl and cyclopentanedione; active halogen compounds such as bis(2-chloroethylurea)-2-hydroxy-4,6-dichloro-1,3,5-triazine, and 2,4-dichloro-6-S-triazine sodium salt; active vinyl compounds such as divinylsulfonic acid, 1,3-vinylsulfonyl-2-propanol, N,N'-ethylenebis(vinylsulfonylacetamide), and 1,3,5-triacryloyl-hexahydro-S-triazine; N-methylol compounds such as dimethylolurea and methyloldimethylhydantoin; melamine resins (for example, methylol melamine, alkylated methylol melamine); epoxy resins;

isocyanate-based compounds such as 1,6-hexamethylene diisocyanate; aziridine-based compounds described in US Patent Nos. 3017280 and 2983611; carboxyimide-based compounds described in US Patent No. 3100704; epoxy-based compounds such as glycerol triglycidyl ether; ethyleneimino-based compounds such as 1,6-hexamethylene-N, N'-bisethyleneurea; halogenated carboxyaldehyde compounds such as mucochloric acid and mucophenoxychloric acid; dioxane-based compounds such as 2,3-dihydroxydioxane; metal-containing compounds such as titanium lactate, aluminum sulfate, chrome alum, potassium alum, zirconium acetate and chromium acetate; polyamine compounds such as tetraethylenepentamine; hydrazide compounds such as adipic dihydrazide; and low molecular compounds or polymers containing two or more oxazoline groups.

Furthermore, preferred examples of the crosslinking agent for the water-soluble resin according to the invention also include the polyvalent metal compounds listed below. When a polyvalent metal compound is used, the compound not only works as a crosslinking agent, but is also capable of further enhancing ozone resistance, image blurring and glossiness.

The polyvalent metal compound is preferably a water-soluble compound, and examples thereof include calcium acetate, calcium chloride, calcium formate, calcium sulfate, barium acetate, barium sulfate, barium phosphate, manganese chloride, manganese acetate, manganese formate dihydrate, manganese ammonium sulfate hexahydrate, cupric chloride, ammonium copper(II) chloride dihydrate, copper sulfate, cobalt chloride, cobalt thiocyanate, cobalt sulfate, nickel sulfate hexahydrate, nickel chloride hexahydrate, nickel acetate tetrahydrate, nickel ammonium sulfate hexahydrate, nickel amidosulfate tetrahydrate, aluminum sulfate, aluminum alum, aluminum sulfite, aluminum thiosulfate, polyaluminum chloride, aluminum nitrate nonahydrate, aluminum chloride hexahydrate, ferrous bromide, ferrous chloride, ferric chloride, ferrous sulfate, ferric sulfate, zinc phenolsulfonate, zinc bromide, zinc chloride, zinc nitrate hexahydrate, zinc sulfate, titanium tetrachloride, tetraisopropyl titanate, titanium acetylacetonate, titanium lactate, zirconium acetylacetonate, zirconium acetate, zirconium sulfate, zirconium ammonium carbonate, zirconium stearate, zirconium octoate, zirconium nitrate, zirconium oxychloride, zirconium hydroxychloride, chromium acetate, chromium sulfate, magnesium sulfate, magnesium chloride hexahydrate, magnesium citrate nonahydrate, sodium phosphotungstate, tungsten sodium citrate, dodecatungstophosphoric acid n-hydrate, dodecatungstosilicic acid 26-hydrate, molybdenum chloride, dodecamolybdophosphoric acid n-hydrate, gallium nitrate, germanium nitrate, strontium nitrate, yttrium acetate, yttrium chloride, yttrium nitrate, indium nitrate, lanthanum nitrate, lanthanum chloride, lanthanum acetate, lanthanum benzoate, cerium chloride, cerium sulfate, cerium octoate, praseodymium nitrate, neodymium nitrate, samarium nitrate, europium nitrate, gadolinium nitrate, dysprosium nitrate, erbium nitrate, ytterbium nitrate, hafnium chloride, and bismuth nitrate.

Among those described above, aluminum-containing compounds (water-soluble aluminum compounds) such as aluminum sulfate, aluminum alum, aluminum sulfite, aluminum thiosulfate, polyaluminum chloride, aluminum nitrate nonahydrate, and aluminum chloride hexahydrate; zirconium-containing compounds (water-soluble zirconium compounds) such as zirconium acetylacetonate, zirconium acetate, zirconium sulfate, zirconium ammonium carbonate, zirconium stearate, zirconium octoate, zirconium nitrate, zirconium oxychloride, and zirconium hydroxychloride; and titanium-containing compounds such as titanium tetrachloride, tetraisopropyl titanate, titanium acetylacetonate, and titanium lactate are preferred, and particularly, polyaluminum chloride, zirconium acetate, zirconium ammonium carbonate and zirconium oxychloride are preferred.

Examples of the crosslinking agent according to the invention have been listed above, but among them, boron compounds and zirconium compounds are particularly preferred.

According to the invention, the crosslinking agent is preferably contained in at a proportion of 5% by mass to 50% by mass, and more preferably 8% by mass to 30% by mass, with respect to the water-soluble resin. When the content of the crosslinking agent is in the range described above, the water-soluble resin is effectively crosslinked, thereby increasing the hardness of the ink receiving layer, cracking and the like is prevented, and at the same time, excellent scratch resistance may be obtained.

Furthermore, the crosslinking agent may be used singly, or two or more kinds may be used in combination. However, from the viewpoint of working as a suitable crosslinking agent and simultaneously further enhancing ozone resistance, image blurring and glossiness, the polyvalent metal compound (particularly preferably, a zirconium compound) is at least incorporated in an amount of preferably 0.1% by mass or greater, more preferably 0.5% by mass or greater, and particularly preferably 1.0% by mass or greater, based on the water-soluble resin. Furthermore, there are

no particular limitations, but the upper limit of the content of the polyvalent metal compound is preferably 50% by mass or less, from the viewpoint of image density, ink absorbability and suppression of curling of the recording medium.

According to the invention, the crosslinking agent may be added to the coating liquid for ink receiving layer and/or the coating liquid for forming an adjacent layer of the ink receiving layer during the formation of the ink receiving layer, or the crosslinking agent may be supplied to the ink receiving layer by applying in advance a coating liquid containing the crosslinking agent on a support, and then applying the coating liquid for ink receiving layer, or by applying a coating liquid for ink receiving layer which does not contain the crosslinking agent, drying, and then overcoating a crosslinking agent solution thereon. Preferably, from the viewpoint of production efficiency, it is preferable to add the crosslinking agent into the coating liquid for ink receiving layer or a coating liquid for forming a layer adjacent to this ink receiving layer, and to form the ink receiving layer and to simultaneously supply the crosslinking agent. Particularly, from the viewpoint of enhancing the print density and glossiness of images, it is preferable to incorporate the crosslinking agent to the coating liquid for ink receiving layer. Furthermore, the concentration of the crosslinking agent in the coating liquid for ink receiving layer is preferably 0.05% by mass to 10% by mass, and more preferably 0.1% by mass to 7% by mass.

For example, the crosslinking agent may be suitably applied in the following manner. In this application, a boron compound will be taken as an example for the explanation. That is, in the case where the ink receiving layer is a layer obtained by applying a coating liquid for ink receiving layer (first coating liquid) and crosslinking and curing the coated layer, the crosslinking and curing is carried out by applying a basic solution having a pH of 8 or higher (second coating liquid) on the coated layer (1) at the same time when the coating liquid is applied to form a coated layer, or (2) in the middle of drying of the coated layer formed by applying the coating liquid, and before the coated layer exhibits a decreasing rate of drying. The crosslinking agent boron compound may be contained in any of the first coating liquid and the second coating liquid described above, and may also be contained in both the first coating liquid and the second coating liquid.

(Ammonium carbonate)

It is preferable that the ink receiving layer according to the invention further contain ammonium carbonate. When ammonium carbonate is incorporated into the ink receiving layer, an ink receiving layer having high hardness may be obtained.

The content of ammonium carbonate is preferably 8% by mass or greater, more preferably 9% by mass or greater, and particularly preferably 11% by mass or greater, based on the water-soluble resin. Furthermore, there are no particular limitations on the upper limit, but the upper limit is preferably 20% by mass or less from the viewpoint of image density, ink absorbability, and suppression of curling of the recording medium.

(Water-dispersible cationic resin)

Furthermore, a water-dispersible cationic resin may be incorporated as a component of the ink receiving layer according to the invention. The water-dispersible cationic resin is preferably a urethane resin which is a cationically modified self-emulsifying polymer, and more preferably has a glass transition temperature of lower than 50°C.

This "cationically modified self-emulsifying polymer" means a polymer compound which may form a naturally stabilized emulsified dispersion in a water-based dispersion medium, without using an emulsifier or a surfactant, or if using one, by addition of a very small amount only. In a quantitative definition, the "cationically modified self-emulsifying polymer" means a polymer substance which is stabilized in a water-based dispersing medium at room temperature, 25°C, at a concentration of 0.5% by mass or greater and exhibits emulsifying dispersibility. The concentration is preferably 1% by mass or greater, and particularly, more preferably 3% by mass or greater.

More specific examples of the "cationically modified self-emulsifying polymer" of the invention include polyaddition-based or polycondensation-based polymer compounds having cationic groups such as primary to tertiary amino groups and quaternary ammonium groups.

Examples of a vinyl polymerized polymer which is effective as the polymer include the polymers that may be obtained by polymerizing the following vinyl monomers. That is, acrylic acid esters or methacrylic acid esters (the ester group is an alkyl group or aryl group which may be substituted, and examples thereof include a methyl group, an ethyl group, an n-propyl group, an isopropyl group, an n-butyl group, a sec-butyl group, a tert-butyl group, a hexyl group, a 2-ethylhexyl group, a tert-octyl group, a 2-chloroethyl group, a cyanoethyl group, a 2-acetoxyethyl group, a tetrahydrofurfuryl group, a 5-hydroxypentyl group, a cyclohexyl group, a benzyl group, a hydroxyethyl group, a 3-methoxybutyl group, a 2-(2-methoxyethoxy)ethyl group, a 2,2,2-tetrafluoroethyl group, a 1H,1H,2H,2H-perfluorodecyl group, a phenyl group, a 2,4,5-tetramethylphenyl group, and a 4-chlorophenyl group);

Vinyl esters, specifically, aliphatic carboxylic acid vinyl esters which may be substituted (for example, vinyl acetate, vinyl propionate, vinyl butyrate, vinyl isobutyrate, vinyl caproate, and vinyl chloroacetate), and aromatic carboxylic acid vinyl esters which may be substituted (for example, vinyl benzoate, vinyl 4-methylbenzoate, and vinyl salicylate);

Acrylamides, specifically, acrylamide, N-monasubstituted acrylamide, N-disubstituted acrylamide (the substituent may be an alkyl group, aryl group or silyl group which may be substituted, and examples include a methyl group, an n-propyl group, an isopropyl group, an n-butyl group, a tert-butyl group, a tert-octyl group, a cyclohexyl group, a benzyl group, a hydroxymethyl group, an alkoxymethyl group, a phenyl group, a 2,4,5-tetramethylphenyl group, a 4-chlorophenyl group, and a trimethylsilyl group);

Methacrylamides, specifically, methacrylamide, N-monosubstituted methacrylamide, N-disubstituted methacrylamide, (the substituent may be an alky group, aryl group or silyl group which may be substituted, and examples thereof include a methyl group, an n-propyl group, an isopropyl group, an n-butyl group, a tert-butyl group, a tert-octyl group, a cyclohxyl group, a benzyl group, a hydroxymethyl group, an alkoxymethyl group, a phenyl group, a 2,4,5-tetramethylphenyl group, a 4-chlorophenyl group, and a trimethylsilyl group0;

Olefins (for example, ethylene, propylene, 1-pentene, vinyl chloride, vinylidene chloride, isoprene, chloroprene, and butadiene), styrenes (for example, styrene, methylstyrene, isopropylstyrene, methoxystyrene, acetoxystyrene, and chlorostyrene), vinyl ethers (for example, methyl vinyl ether, butyl vinyl ether, hexyl vinyl ether, and methoxyethyl vinyl ether); and the like may be mentioned.

Other examples of the vinyl monomer include crotonic acid esters, itaconic acid esters, maleic acid diesters, fumaric acid diesters, methyl vinyl ketone, phenyl vinyl ketone, methoxyethyl vinyl ketone, N-vinyloxazolidone, N-vinylpyrrolidone, methylenemalonitrile, diphenyl-2-acryloyloxyethyl phosphate, diphenyl-2-methacryloyloxyethyl phosphate, dibutyl-2-acryloyloxyethyl phosphate, and dioctyl-2-methacryloyloxyethyl phosphate.

Examples of the monomer having a cationic group include monomers having a tertiary amino group, such as dialkylaminoethyl methacrylate and dialkylaminoethyl acrylate.

Examples of the polyurethane that is applicable to the cationic group-containing polymer include the polyurethanes synthesized from various combinations of the diol compounds and diisocyanate compounds listed below, by a polyaddition reaction.

Specific examples of the diol compound include ethylene glycol, 1,2-propanediol, 1,3-propanediol, 1,2-butanediol, 1,3-butanediol, 2,3-butanediol, 2,2-dimethyl-1,3-propanediol, 1,2-pentanediol, 1,4-pentanediol, 1,5-pentanediol, 2,4-pentanediol, 3,3-dimethyl-1,2-butanediol, 2-ethyl-2-methyl-1,3-propanediol, 1,2-hexanediol, 1,5-hexanediol, 1,6-hexanediol, 2,5-hexanediol, 2-methyl-2,4-pentanediol, 2,2-diethyl-1,3-propanediol, 2,4-dimethyl-2,4-pentanediol, 1,7-heptanediol, 2-methyl-2-propyl-1,3-propanediol, 2,5-dimethyl-2,5-hexanediol, 2-ethyl-1,3-hexanedial, 1,2-octanediol, 1,8-octanediol, 2,2,4-trimethyl-1,3-pentanediol, 1,4-cyclohexanedimethanol, hydroquinone, diethylene glycol, triethylene glycol, dipropylene glycol, tripropylene glycol, polyethylene glycol (average molecular weight = 200, 300, 400, 600, 1000, 1500, 4000), polypropylene glycol (average molecular weight = 200, 400, 1000), polyester polyol, 4,4'-dihydroxy-diphenyl-2,2-propane, and 4,4'-dihydroxyphenylsulfone.

Examples of the diisocyanate compound include methylene diisocyanate, ethylene diisocyanate, isophorone diisocyanate, hexamethylene diisocyanate, 1,4-cyclohexane diisocyanate, 2,4-toluene diisocyanate, 2,6-toluene diisocyanate, 1,3-xylylene diisocyanate, 1,5-naphthalene diisocyanate, m-phenylene diisocyanate, p-phenylene diisocyanate, 3,3'-dimethyl-4,4'-diphenylmethane diisocyanate, 3,3'-dimethylbiphenylene diisocyanate, 4,4'-biphenylene diisocyanate, dicyclohexylmethane diisocyanate, and methylenebis(4-cyclohexy) isocyanate).

Examples of the cationic group contained in the cationic group-containing polyurethane include cationic groups such as primary to tertiary amines and quaternary ammonium salts. The self-emulsifying polymer that is used in the aqueous dispersion according to the invention is preferably a urethane resin having a cationic group such as a tertiary amine or a quaternary ammonium salt.

The cationic group-containing polyurethane is obtained by, for example, using a product produced by introducing a cationic group to a diol such as described above during the synthesis of the polyurethane. Furthermore, in the case of a quaternary ammonium salt, a polyurethane containing a tertiary amino group may also be quaternized with a quaternizing agent.

The diol compound and diisocyanate compound that may be used in the synthesis of the polyurethane may be respectively used alone, and in accordance with various purposes (for example, adjustment of the glass transition temperature, Tg, of the polymer, enhancement of solubility, impartation of compatibility with a binder, and improvement of stability of the dispersion), the compounds may be respectively used singly, or two or more kinds may be used in mixture at any ratio.

(Mordant)

The ink receiving layer according to the invention preferably contains a mordant such as described below, for the purpose of further enhancing the blurring over time of images and water resistance. The mordant is preferably an organic mordant such as a cationic polymer (cationic mordant), or an inorganic mordant such as a water-soluble metal compound. As the cationic mordant, a polymer mordant having a primary, secondary or tertiary amino group or a quaternary ammonium salt group as a cationic functional group, is suitable used, but a cationic non-polymer mordant may also be used.

The polymer mordant is preferably obtained as a homopolymer of a monomer having a primary, secondary or tertiary amino group or a salt thereof, or a quaternary ammonium salt group (mordant monomer), or as a copolymer or a polycondensation reaction product of the mordant monomer and another monomer (non-mordant monomer). Furthermore, such a polymer mordant may be used in the form of a water-soluble polymer or in the form of water-dispersible latex particles.

Examples of the mordant monomer include trimethyl-p-vinylbenzylammonium chloride, trimethyl-m-vinylbenzylammonium chloride, triethyl-p-vinylbenzylammonium chloride, triethyl-m-vinylbenzylammonium chloride, N,N-dimethyl-,N-ethyl-N-p-vinylbenzylammonium chloride, N,N-diethyl-N-methyl-N-p-vinylbenzylammonium chloride, N,N-dimethyl-N-n-propyl-N-p-vinylbenzylaminonium chloride, N,N-dimethyl-N-n-octyl-N-p-vinylbenzylammonium chloride, N,N-dimethyl-N-benzyl-N-p-vinylbenzylammonium chloride, N,N-diethyl-N-benzyl-N-p-vinylbenzylammonium chloride, N,N-dimethyl-N-(4-methyl)benzyl-N-p-vinylbenzylammnonium chloride, N,N-dimethyl-N-phenyl-N-p-vinylbenzylammonium chloride;

trimethyl-p-vinylbenzylammonium bromide, trimethyl-m-vinylbenzylammonium bromide, trimethyl-p-vinylbenzylammonium sulfonate, trimethyl-m-vinylbenzylammnonium sulfonate, trimethyl-p-vinylbenzylammonium acetate, trimethyl-m-vinylbenzylammonium acetate, N,N,N-triethyl-N-2-(4-vinylphenyl)ethylammonium chloride, N,N,N-triethyl-N-2-(3-vinylphenyl)ethylammonium chloride, N,N-diethyl-N-methyl-N-2-(4-vinylphenyl)ethylammonium chloride, N,N-diethyl-N-methyl-N-2-(4-vinylpheny)ethylammonium acetate;

quaternization products of N,N-dimethylaminoethyl (meth)acrylate, N,N-diethylaminoethyl (meth)acrylate, N, N-dimethylaminopropyl (meth)acrylate, N,N-diethylaminopropyl (meth)acrylate, N,N-dimethylaminoethyl (meth)acrylamide, N,N-diethylaminoethyl (meth)acrylamide, N,N-dimethylaminopropyl (meth)acrylamide, and N,N-diethylaminopropyl (meth)acrylamide, produced by using methyl chloride, ethyl chloride, methyl bromide, ethyl bromide, methyl iodide or ethyl iodide, or products obtained by substituting the anions of those compounds with sulfonate, alkylsulfonate, acetate or alkylcarboxylate.

Specific examples of the compound include monomethyldiallylammonium chloride, trimethyl-2-(methacryloyloxy)ethylammonium chloride, triethyl-2-(methacryloyloxy)ethylammonium chloride, trimethyl-2-(acryloyloxy)ethylammonium chloride, triethyl-2-(acryloyloxy)ethylammonium chloride, trimethyl-3-(methacryloyloxy)propylammonium chloride, triethyl-3-(methacryloyloxy)propylammoniuim chloride, trimethyl-2-(methacryloylamino)ethylammonium chloride, triethyl-2-(methacrylamino)ethylammonium chloride, trimethyl-2-(acryloylamino)ethylammonium chloride, triethyl-2-(acryloylamino)ethylammonium chloride, trimethyl-3-(methacrylamino)propylammonium chloride, triethyl-3-(methacryloylamino)propylammonium chloride, trimethyl-3-(acryloylamino)propylammonium chloride, triethyl-3-(acrylamino) propylammonium chloride;

N,N-dimetliyl-N-ethyl-2-(methacryloyloxy)ethylammonium chloride, N,N-diethyl-N-methyl-2-(methacryloyloxy) ethylammonium chloride, N,N-dimethyl-N-ethyl-3-(acryloylamino)propylammonium chloride, trimethyl-2-(methacryloyloxy)ethylammonium bromide, trimethyl-3-(acryloylamino)propylammonium bromide, trimethyl-2-(methacryloyloxy)ethylammonium sulfonate, and trimethyl-3-(acryloylamino)propylammonium acetate. In addition to these, N-vinylimidazole, N-vinyl-2-methylimidazole and the like may also be used as copolymerizable monomers. Furthermore, a product obtained by performing polymerization using a polymerization unit such as N-vinylacetamide or N-vinylformamide and converting the polymerization unit into a vinylamine unit through hydrolysis, or a salt thereof may also be used.

The non-mordant monomer means a monomer which does not include a basic or cationic moiety such as a primary, secondary or tertiary amino group or a salt thereof, or a quaternary ammonium salt group, and does not exhibit an interaction, or exhibits substantially less interaction, with the dye in the inkjet ink. Examples thereof include (meth) acrylic acid alkyl esters; (meth)acrylic acid cycloalkyl esters such as cyclohexyl (meth)acrylate; (meth)acrylic acid aryl esters such as phenyl (meth)acrylate; aralkyl esters such as benzyl (meth)acrylate; aromatic vinyls such as styrene, vinyltoluene and $\alpha$-methylstyrene; vinyl esters such as vinyl acetate, vinyl propionate and vinyl versatate; allyl esters such as allyl acetate; halogen-containing monomers such as vinylidene chloride and vinyl chloride; vinyl cyanide such as (meth)acrylonitrile; and olefins such as ethylene and propylene,

The (meth)acrylic acid alkyl ester is preferably a (meth)acrylic acid alkyl ester having an alkyl moiety having 1 to 18 carbon atoms, and specific examples thereof include methyl (meth)acrylate, ethyl (meth)acrylate, propyl (meth) acrylate, isopropyl (meth)acrylate, n-butyl (meth)acrylate, isobutyl (meth)acrylate, t-butyl (meth)acrylate, hexyl (meth) acrylate, octyl (meth)acrylate, 2-ethylhexyl (meth)acrylate, lauryl (meth)acrylate, and stearyl (meth)acrylate. Among these, methyl acrylate, ethyl acrylate, methyl methacrylate, ethyl methacrylate, and hydroxyethyl methacrylate are preferred. The non-mordant monomers may also be used singly or in combination of two or more kinds.

Furthermore, preferred examples of the polymer mordant include polydiallyldimethylammonium chloride, polymethacryfoyloxyethyl-$\beta$-hyoxyethyldimethylammonium chloride, polyethyleneimine, polyamide-polyamine resins, cationized starch, dicyandiamide-formalin condensate, dimethyl-2-hydroxypropylammonium salt polymers, polyamidine, polyvinylamine, dicyan-based cation resins represented by dicyandiamide-formalin polycondensate, polyamine-based cation resins represented by dicyanamide-diethylenetriamine polycondensate, epichlorohydrin dimethylamine addition polymer, dimethyldiallyammonium chloride-$SO_2$ copolymer, and diallylamine salt-$SO_2$ copolymer.

Specific examples of the polymer mordant include those described in JP-A Nos. 48-28325, 54-74430, 54-124726, 55-22766, 55-142339, 60-23850, 60-23851, 60-23852, 60-23853, 60-57836, 60-60643, 60-118834, 60-122940, 60-122941, 60-122942, 60-235134 and 1-161236, US Patent Nos. 2484430, 2548564, 3148061, 3309690, 4115124, 4124386, 4193800,4273853,4282305 and 4450224, JP-A Nos. 1-161236, 10-81064, 10-119423, 10-157277, 10-217601, 11-348409, 2001-138621, 2000-43401, 2000-211235, 2000-309157, 2001-96897, 2001-138627, 11-91242, 8-2087, 8-2090, 8-2091, 8-2093, 8-174992, 11-192777 and 2001-301314.

Examples of the inorganic mordant include polyvalent water-soluble metal salts or hydrophobic metal salt compounds other than those described above. Examples thereof include salts or complexes of metals selected from magnesium, aluminum, calcium, scandium, titanium, vanadium, manganese, iron, nickel, copper, zinc, gallium, germanium, strontium, yttrium, zirconium, molybdenum, indium, barium, lanthanum, cerium, praseodymium, neodymium, samarium, europium, gadolinium, dysprosium, erbium, ytterbium, hafnium, tungsten and bismuth.

Specific preferred examples include calcium acetate, calcium chloride, calcium formate, calcium sulfate, barium acetate, barium sulfate, barium phosphate, manganese chloride, manganese acetate, manganese formate dihydrate, manganese ammonium sulfate hexahydrate, cupric chloride, ammonium copper(II) chloride dihydrate, copper sulfate, cobalt chloride, cobalt thiocyanate, cobalt sulfate, nickel sulfate hexahydrate, nickel chloride hexahydrate, nickel acetate tetrahydrate, nickel ammonium sulfate hexahydrate, nickel amidosulfate tetrahydrate, aluminum sulfate, aluminum alum, basic polyaluminum hydroxide, aluminum sulfite, aluminum thiosulfate, polyaluminum chloride, aluminum nitrate nonahydrate, aluminum chloride hexahydrate, ferrous bromide, ferrous chloride, ferric chloride, ferrous sulfate, ferric sulfate, zinc phenolsulfonate, zinc bromide, zinc chloride, zinc nitrate hexahydrate, zinc sulfate, titanium tetrachloride, tetraisopropyl titanate, titanium acetylacetonate, titanium lactate, zirconium acetylacetonate, zirconium acetate, zirconium sulfate, zirconium ammonium carbonate, zirconium stearate, zirconium octoate, zirconium nitrate, zirconium oxychloride, zirconium hydroxychloride, chromium acetate, chromium sulfate, magnesium sulfate, magnesium chloride hexahydrate, magnesium citrate nonahydrate, sodium phosphotungstate, sodium tungsten citrate, dodecatungstophosphoric acid n-hydrate, dodecatungstosilicic acid 26-hydrate, molybdenum chloride, dodecamolybdophosphoric acid n-hydrate, potassium nitrate, manganese acetate, germanium nitrate, strontium nitrate, yttrium acetate, yttrium chloride, yttrium nitrate, indium nitrate, lanthanum nitrate, lanthanum chloride, lanthanum acetate, lanthanum benzoate, cerium chloride, cerium sulfate, cerium octoate, praseodymium nitrate, neodymium nitrate, samarium nitrate, europium nitrate, gadolinium nitrate, dysprosium nitrate, erbium nitrate, ytterbium nitrate, hafnium chloride, and bismuth nitrate. Among them, aluminum-containing compounds, titanium-containing compounds, zirconium-containing compounds, and metal compounds (salts or complexes) of Group IIIB series of the Periodic Table.

The "polyvalent metal compounds" listed in the section (Crosslinking agent) may also be suitably used as mordants.
The amount of addition in the case of adding the mordant into the ink receiving layer is preferably 0.01 to 5 g/m$^2$.

(Other components)

The ink receiving layer according to the invention is constituted to optionally include the following components. That is, the ink receiving layer may contain various ultraviolet absorbers, oxidation inhibitors, and discoloration preventing agents such as singlet oxygen quenchers, for the purpose of suppressing deterioration of the ink color material.
Examples of the ultraviolet absorbers include cinnamic acid derivatives, benzophenone derivatives, and benzotriazolylphenol derivatives. Examples thereof include butyl $\alpha$-cyanophenylcinnamate, o-benzotriazolephenol, o-benzotriazole-p-chlarophenol, o-benzotriazole-2,4-di-t-butylphenol, and o-benzotriazole-2,4-di-t-octylphenol. Hindered phenol compounds may also be used as ultraviolet absorbers, and specifically, phenol derivatives substituted with a branched alkyl group at at least one or more positions of the 2-position and the 6-position, are preferred.

Furthermore, benzotriazole-based ultraviolet absorbers, salicyclic acid-based ultraviolet absorbers, cyanoacrylate-based ultraviolet absorbers, oxalic acid anilide-based ultraviolet absorbers may also be used. The ultraviolet absorbers are described in, for example, JP-ANos. 47-10537, 58-111942, 58-212844, 59-19945, 59-46646, 59-109055 and 63-53544, Japanese Examined Patent Application (JP-B) Nos. 36-10466, 42-26187, 48-30492, 48-31255, 48-41572, 48-54965 and 50-10726, US Patent Nos. 2,719,086, 3,707,375, 3,754,919, and 4,220,711.

Fluorescent whitening agents may also be used as ultraviolet absorbers, and examples include couxnarine-based fluorescent whitening agents. Specifically, the fluorescent whitening agents are described in JP-B Nos. 45-4699 and 54-5324, and the like.

Examples of the oxidation inhibitors include those described in European Patent (EP) Nos. 223739, 309401, 309402, 310551, 310552 and 459416, German Patent No. 3435443, JP-ANos. 54-48535, 60-107384, 60-107383, 60-125470, 60-125471, 60-125472, 60-287485, 60-287486, 60-287487, 60-287488, 61-360287, 61-185483, 61-211079, 62-146678, 62-146680, 62-146679, 62-282885, 62-262047, 63-051174, 63-89877, 63-88380, 66-88381, 63-113536;

JP-A Nas. 63-163351, 63-203372, 63-224989, 63-251282, 63-267594, 63-182484, 1-239282, 2-262654, 2-71262, 3-121449, 4-291685, 4-291684, 5-61166, 5-119449, 5-188687, 5-188686, 5-110490, 5-1108437 and 5-170361,

JP-B Nos. 48-43295 and 48-33212, US Patent Nos.4814262 and 4980275.

Specific examples include 6-ethoxy-1-phenyl-2,2,4-trimethyl-1,2-dihydroquinoline, 6-ethoxy-1-octyl-2,2,4-trimethyl-1,2-dihydroquinoline, 6-ethoxy-1-phenyl-2,2,4-trimethyl-1,2,3,4-tetrahydroquinoline, 6-ethoxy-1-octyl-2,2,4-trimethyl-1,2,3,4-tetrahydroquinoline, nickel cyclohexanonate, 2,2-bis(4-hydroxyphenyl)propane, 1,1-bis(4-hydroxyphenyl)-2-ethylhexane, 2-methyl-4-methoxydiphenylamine, and 1-methyl-2-phenylindole.

These discoloration preventing agents may be used singly or in combination of two or more kinds. The discoloration preventing agent may be solubilized in water, dispersed or emulsified, and may also be encapsulated in microcapsules. The amount of addition of the discoloration preventing agent is preferably 0.01% by mass to 10% by mass of the coating liquid for ink receiving layer.

According to the invention, it is preferable that the ink receiving layer contain a high boiling point organic solvent for the prevention of curling. The high boiling point organic solvent is preferably a water-soluble solvent, and examples of the water-soluble high boiling point organic solvent include alcohols such as ethylene glycol, propylene glycol, diethylene glycol, triethylene glycol, glycerin, diethylene glycol monobutyl ether (DEGMBE), triethylene glycol monobutyl ether, glycerin monomethyl ether, 1,2,3-butanetriol, 1,2,4-butanetriol, 1,2,4-pentanetriol, 1,2,6-hexanetriol, thiodiglycol, triethanolamine, and polyethylene glycol (having a weight average molecular weight of 400 or less). A preferred example is diethylene glycol monobutyl ether (DEGMBE).

The content of the high boiling point organic solvent in the coating liquid for ink receiving layer is preferably 0.05% by mass to 1% by mass, and particularly preferably 0.1% by mass to 0.6% by mass.
Furthermore, the coating liquid for ink receiving layer may also contain various inorganic salts, and an acid or an alkali as a pH adjusting agent, for the purpose of increasing the dispersibility of the fine particles.
In addition, the coating liquid for ink receiving layer may also contain metal oxide fine particles having electron conductivity for the purpose of suppressing frictional electrification or peeling electrification of the surface, and various matting agents for the purpose of reducing the frictional properties of the surface.

In regard to suitable aspects for combination of the invention, preferred combination is such that the water-soluble organic solvent of the ink is one or more selected from ethylene glycol monomethyl ether, ethylene glycol monoethyl ether, ethylene glycol monobutyl ether, propylene glycol monomethyl ether, propylene glcyol monoethyl ether, propylene glycol monobutyl ether, (mono-, di-, tri-)ethylene glycol dimethyl ether, and (mono-, di-, tri-)propylene glycol dimethyl ether, the content of that water-soluble organic solvent is from 85% by mass to 100% by mass of the total amount of water-soluble organic solvents, and the most preferred combination is such that the water-soluble resin in the ink receiving layer is polyvinyl alcohol.

(Support)

In regard to the support that is used in the invention, a transparent support formed from a transparent material such as plastic, and an opaque support formed from an opaque material such as paper may all be used, but it is preferable that the support have, as the outermost layer on the side where the ink receiving layer is provided, a resin layer containing a thermoplastic resin such as polyethylene (hereinafter, may be simply referred to as "thermoplastic resin-containing layer"). Furthermore, the thermoplastic resin-containing layer may be provided on both sides of a paper substrate in accordance with the purpose and the like.

Next, the thermoplastic resin will be explained.
There are no particular limitations on the thermoplastic resin, and the thermoplastic resin may be appropriately selected for use from fine particles of a known thermoplastic resin such as a polyolefin resin (for example, a homopolymer of an $\alpha$-olefin, such as polyethylene and polypropylene, or a mixture of such homopolymers), or a latex of such a thermoplastic resin. Among them, the thermoplastic resin is preferably a polyolefin resin (particularly, a polyethylene resin).

Concerning the polyolefin resin, there are no particular limitations on the molecular weight as long as extrusion coating is applicable, and the molecular weight may be appropriately selected according to the purpose. Usually, a polyolefin resin having a molecular weight in the range of 20,000 to 200,000 is used.
There are no particular limitations on the polyethylene resin, and the polyethylene resin may be appropriately selected according to the purpose. Examples include high density polyethylene (HDPE), low density polyethylene (LDPE), and linear low density polyethylene (L-LDPE).

It is preferable to add a white pigment, a color pigment or a fluorescent whitening agent, and a stabilizer such as phenol, bisphenol, thiobisphenol, an amine, benzophenone, a salicylic acid salt, benzotriazole or an organic metal compound, into the thermoplastic resin-containing layer.

Examples of the method for forming the thermoplastic resin-containing layer include melt extrusion, wet lamination and dry lamination, and melt extrusion is most preferred. In order to form a thermoplastic resin-containing layer by the melt extrusion, it is preferable, for the purpose of strengthening the adhesion between the thermoplastic resin-containing layer and a layer underneath (hereinafter, may be referred to as "coating layer"), to subject the surface of the coating layer to a pretreatment.

Examples of the pretreatment include an acid etching treatment using a sulfuric acid-chromic acid mixture, a flame treatment using a gas flame, an ultraviolet irradiation treatment, a corona discharge treatment, a glow discharge treatment, and an anchor coating treatment using an alkyl titanate, and the pretreatment may be appropriately selected and carried out. However, particularly in view of convenience, a corona discharge treatment is preferred. In the case of a corona discharge treatment, it is necessary to treat the surface so as to obtain a contact angle with water of 70° or less.

- Paper substrate -

As the support according to the invention, a paper substrate, which is an opaque support, may be used. The paper substrate may be any of a natural pulp paper containing a conventional natural pulp as a main component, a mixed pulp paper formed of a natural pulp and a synthetic fiber, a synthetic fiber paper containing a synthetic fiber as a main component, and a so-called synthetic paper obtained by making a synthetic resin film of polystyrene, polyethylene terephthalate, polypropylene or the like into a pseudo-paper, but the paper substrate is particularly preferably a natural pulp paper (hereinafter, simply referred to as "base paper"). For the base paper, a neutral paper (pH 5 to 9) or an acidic paper may be used, but a neutral paper is more preferred.

Examples of the base paper that may be used include products containing a natural pulp selected from soft wood, hard wood and the like as a main raw material, and optionally containing a loading material such as clay, talc, calcium carbonate or urea resin fine particles; a sizing agent such as rosin, an alkyl ketene dimer, a higher fatty acid, an epoxidated fatty acid amide, paraffin wax or an alkenylsuccinic acid; a paper strengthening agent such as starch, polyamide polyamine epichlorohydrin, or polyacrylamide; a fixing agent such as a sulfuric acid band or a cationic polymer; and the like. Furthermore, a softening agent such as a surfactant may be added. Furthermore, a synthetic paper using a synthetic pulp instead of the natural pulp may also be used, and a mixture of a natural pulp and a synthetic pulp at any ratio may also be used. Among them, it is preferable to use a hard wood pulp, which acquires higher smoothness by using short fiber. The freeness of the pulp material used is preferably in the range of 200 to 500 ml (C.S.F), and more preferably in the range of 300 to 400 ml.

The paper substrate may also contain other components such as a sizing agent, a softening agent, a paper strengthening agent and a fixing agent. Examples of the sizing agent include rosin, paraffin wax, a higher fatty acid salt, an alkenylsuccinic acid salt, a fatty acid anhydride, a styrene-maleic anhydride copolymer, an alkyl ketene dimer, and an epoxidated fatty acid amide. Examples of the softening agent include a reaction product of a maleic anhydride copolymer and a polyalkylene polyamine, and a quaternary ammonium salt of a fatty acid. Examples of the paper strengthening agent include polyacrylamide, starch, polyvinyl alcohol, a melamine-formaldehyde condensate, and gelatin. Examples of the fixing agent include sulfuric acid band, and polyamide polyamine epichlorohydrin. In addition to these, a dye, a fluorescent dye, an antistatic agent and the like may be added as necessary.

The paper substrate is preferably subjected, in advance prior to the formation of the thermoplastic resin-containing layer, to an activation treatment such as a corona discharge treatment, a flame treatment, a glow discharge treatment, or a plasma treatment.

- Calendar treatment -

The support according to the invention may be subjected to a calendar treatment. When a thermoplastic resin-containing layer is provided on the paper substrate, and then a calendar treatment is applied thereto under particular conditions, smoothness of the thermoplastic resin-containing layer may be obtained, and high glossiness, high smoothness and high quality image formability of the surface of the ink receiving layer, which is formed in the presence of the thermoplastic resin-containing layer, may be secured.

The calendar treatment is preferably carried out such that a soft calendar or a super calendar, in which at least one of the roll pair is composed of a metal roll (preferably, composed of a metal roll and a resin roll), or both of the calendars are used, and the surface temperature of the metal roll is brought to a temperature equal to or higher than the glass transition temperature of the thermoplastic resin mentioned above, and at the same time the nip pressure between the roll nips in the roll pair is set at 50 to 400 kg/cm.

Hereinafter, a soft calendar and a super calendar, which have a metal roll and a resin roll, respectively, will be described in detail. There are no particular limitations on material and the like of the metal roll as long as the metal roll is a cylindrical or columnar roll having a smooth surface, and has a heating means in the inside, and any known metal roll may be appropriately selected and used. Furthermore, the metal roll is such that a surface roughness with greater smoothness is more preferable, because the metal roll is brought into contact with the recorded surface side between the two surfaces of the support, that is, the surface on the side where the ink receiving layer is formed, during the calendar treatment. Specifically, the surface roughness is preferably 0.3 s or less, and more suitably 0.2 s or less, in terms of the surface roughness defined in JIS B0601.

The surface temperature employed during the treatment of the metal roll is generally preferably 70°C to 250°C

in the case of treating a paper substrate. On the contrary, in the case of treating a paper substrate having the thermoplastic resin-containing layer provided thereon, the surface temperature is preferably a temperature equal to or higher than the glass transition temperature, Tg, of the thermoplastic resin contained in the thermoplastic resin-containing layer, and more preferably a temperature equal to or higher than Tg and (Tg+40°C) or lower.

The resin roll may be appropriately selected from a synthetic resin roll formed of a polyurethane resin, a polyamine resin or the like, and a synthetic resin roll having a Shore D hardness of 60 to 90 is adequate.

Furthermore, the nip pressure of the roll pair having the metal roll described above is appropriately 50 to 400 kg/cm, and preferably 100 to 300 kg/cm. A treatment using a soft calendar and/or super calendar arranged with a pair of rolls composed as described above, is preferably carried out about one to two times.

There are no particular limitations on the support used in the inkjet recording medium, and a transparent support formed of a transparent material such as plastic may be used. The material that may be used for the transparent support is preferably a material which is transparent and has properties capable of enduring the radiant heat when used in OHPs or backlight displays. Examples of such a material include polyesters such as polyethylene terephthalate (PET); polysulfone, polypheaaylene oxide, polyimide, polycarbonate, and polyamine. Among them, polyesters are preferred, and particularly polyethylene terephthalate is preferred.

Furthermore, an optical disk for read-only use, such as a CD-ROM or a DVD-ROM, a recordable type optical disk such as a CD-R or a DVD-R, and a rewritable type optical disk may also be used as the support, and may have an ink receiving layer and a gloss imparting layer provided on the label side.

The constituent layers (for example, an ink receiving layer) of the inkjet recording medium of the invention may contain a dispersion of polymer fine particles. The dispersion of polymer fine particles is used for the purpose of improving the film properties such as stabilization of dimension, prevention of curling, prevention of adhesion, and prevention of cracking of the film. Descriptions on the dispersion of polymer fine particles are found in JP-A Nos. 62-245258, 62-1316648 and 62-110066. When a dispersion of polymer fine particles having a low glass transition temperature (40°C or lower) is added to the ink receiving layer, cracking of the layer or curling may be prevented. Furthermore, curling may also be prevented by adding a dispersion of polymer fine particles having a high glass transition temperature to the back layer.

The thickness of the ink receiving layer of the invention needs to be determined in connection with the porosity of the layer, since it is necessary for the ink receiving layer to have an absorption capacity capable of absorbing all liquid droplets in the case of inkjet recording. For example, when the amount of ink is 8 nl/$mm^2$, and the porosity is 60%, a film having a thickness of about 15 $\mu$m or greater is required. Considering this, in the case of inkjet recording, a thickness of the ink receiving layer of 10 to 50 $\mu$m is preferred.

The porosity of the ink receiving layer may be measured using a mercury porosimeter (trade name: "PORESIZER 9320-PC2", manufactured by Shimadzu Corp.).

The ink receiving layer preferably has excellent transparency, but the reference definition is such that the haze value obtainable when the ink receiving layer is formed on a transparent film support is preferably 30% or less, and more preferably 20% or less. The haze value may be measured using a haze meter (trade name: "HGM-2DP", manufactured by Suga Test Instruments Co., Ltd.).

- Inkjet recording system -

In regard to the inkjet recording method of the invention, there are no particular limitations on the inkjet recording system, and any known system is used, for example, a charge control system that ejects ink by utilizing an electrostatic attraction force; a drop on demand system that utilizes the vibration pressure of a piezoelectric element (pressure pulse system); an acoustic ink-jet system that converts electric signals into acoustic beams, irradiates ink with the beams, and ejects the ink by utilizing a radiation pressure; and a thermal ink-jet system that heats ink to form bubbles and utilizes the pressure resulting therefrom. The inkjet recording system includes the usage of a system that injects a large number of small-volume droplets of a low-concentration ink called photo-ink; a system that improves the image quality by using plural kinds of inks having a substantially identical hue but different concentrations; and a system that makes use of a colorless transparent ink.

(Drying step)

In the inkjet recording method of the invention, drying may be carried out after printing (preferably, within 10 minutes after printing). A drying apparatus is installed in-line or off-line in the inkjet recording apparatus.

The drying method is preferably a heating and drying method, and the heating method is carried out by a conventional method such as heating with warm air or hot air using a heating and blowing dryer, infrared drying using an infrared lamp, hot roll heating, or dielectric heating. In order to obtain recorded images excellent in the concentration and the color change starting immediately after printing, without causing problems such as curling due to overheating, it is preferable to perform a drying treatment within 2 minutes, and more preferably within 1 minute, immediately after printing,

and it is preferable to perform drying at 50°C to 200°C for 1 second to 5 minutes, and more preferably at 50°C to 150°C for 1 second to 5 minutes.

The inkjet recording method may be carried out using the combination of item (2), which is an aspect of a suitable combination for the ink and inkjet recording medium, and performing a drying treatment at 50°C to 150°C for 1 second to 5 minutes within one minutes immediately after printing.

EXAMPLES

The invention will be more specifically described below by way of Examples. The scope of the invention is not intended to be limited to the specific examples shown below. Unless particularly stated otherwise, the units "part" and "percent (%)" are on a mass basis.

(Example 1)

(Production of support)

50 parts of LBKP from acacia and 50 parts of LBKP from aspen were beaten to a Canadian Freeness of 300 ml using a disk refiner to prepare a pulp slurry.

Subsequently, to the pulp slurry thus obtained, 1.3% of a cationically modified starch (trade name: CAT0304L, manufactured by Nippon NSC, Ltd.), 0.15% of an anionic polyacrylamide (trade name: DA4104, manufactured by Seiko PMC Corp.), 0.29% of an alkyl ketene dimer (trade name: SIZEPINE K, manufactured by Arakawa Chemical Industries, Ltd.), 0.29% of an epoxidized behenic acid amide, and 0.32% of polyamide polyamine epichlorohydrin (trade name: ARAFIX 100, manufactured by Arakawa Chemical Industries, Ltd.) were added, based on the pulp, and then 0.12% of a defoaming agent was added thereto.

The pulp slurry prepared as described above was subjected to papermaking with a Fourdrinier paper machine. The web was dried by pressing the felt surface of the web against a drum dryer cylinder with a dryer canvas interposed therebetween, and in this step, drying was carried out by setting the tension force of the dryer canvas at 1.6 kg/cm. Subsequently, the base paper was coated with 1 $g/m^2$ of polyvinyl alcohol (trade name: KL-118, manufactured by Kuraray Co., Ltd.) on both surfaces using a size press, dried and subjected to a calendar treatment. The papermaking was carried out by setting the basis weight of the base material at 166 $g/m^2$, and thus a base paper (substrate paper) having a thickness of 160 μm was obtained.

After the wire surface (rear surface) of the substrate paper thus obtained was subjected to a corona discharge treatment, and then was coated with high density polyethylene to a thickness of 25 $g/m^2$ using a melt extruder. Thus, a thermoplastic resin layer having a matt surface was formed. This thermoplastic resin layer on the rear surface was further subjected to a corona discharge treatment, and thereafter, a dispersion liquid prepared by dispersing aluminum oxide (trade name: "ALUMINA SIL 100", manufactured by Nissan Chemical industries, Ltd.) and silicon dioxide (trade name: "SNOWTEX O", manufactured by Nissan Chemical Industries, Ltd.) as antistatic agents, at a mass ratio of 1:2 in water, was applied on the thermoplastic resin layer to a dry mass of 0.2 $g/m^2$. Subsequently, the surface was corona-treated and then coated with a polyethylene having a density of 0.93 $g/m^2$ containing 10% by mass of titanium oxide in an amount of 24 $g/m^2$, using a melt extruder.

(Preparation of coating liquid A for ink receiving layer (first liquid))

(1) Gas phase method silica fine particles, (2) ion-exchanged water, (3) "SHALLOL DC-902P" (trade name), and (4) "ZA-30" (trade name), as shown in the following composition, were mixed, and the mixture was dispersed using a bead mill (trade name: KD-P, manufactured by Shinmaru Enterprises Corp.). The dispersion liquid was then heated to 45°C and maintained for 20 hours. Thereafter, (5) an aqueous solution of boric acid, (6) a polycondensate of dimethylamine epichlorohydrin polyalkylene polyamine, (7) a polyvinyl alcohol solution, (8) "SUPERFLEX 650", and (9) aqueous ethanol shown below were added to this dispersion liquid at 30°C, and thus a coating liquid A for ink receiving layer (first liquid) was prepared.

| | |
|---|---|
| (1) Gas phase method silica fine particles<br>(trade name: AEROSIL 300SF75, manufactured by Nippon Aerosil Co., Ltd.) | 100 parts |
| (2) Ion-exchanged water | 555 parts |
| (3) "SHALLOL DC-902P"<br>(trade name, manufactured by Dai-Ichi Kogyo Seiyaku Co., Lid.; dispersant, 51.5% aqueous solution) | 8.7 parts |

(continued)

| | |
|---|---|
| (4) Zirconium acetate<br>(trade name: "ZA-30", manufactured by Daiichi Kigenso Kagaku Kogyo Co., Ltd.; 50% aqueous solution) | 2.7 parts |
| (5) Aqueous solution (7.5%) of boric acid (crosslinking agent) | 50 parts |
| (6) Polycondensate of dimethylamine-epichlorohydrin-polyalkylene polyamine<br>(trade name: "SC-505", manufactured by Hymo Co., Ltd.; 50% aqueous solution0 | 0.77 parts |
| (7) Polyvinyl alcohol (water-soluble resin) solution having the following composition | 290 parts |
| (8) "SUPERFLEX 650"<br>(trade name, manufactured by Dai-Ichi Kogyo Seiyaku. Co., Ltd.; cationically modified polyurethane) | 25 parts |
| (9) Aqueous ethanol<br>(ethanol content 59%) | 75 parts |

**[0163]** - Composition of polyvinyl alcohol solution -

| | |
|---|---|
| · Polyvinyl alcohol<br>(trade name: "PVA224", manufactured by Kuraray Co., Ltd.; degree of saponification 88%, degree of polymerization 2400) | 20.3 parts |
| · Diethylene glycol monobutyl ether<br>(trade name: "BUTYCENOL 20P", manufactured by Kyowa Hakko Chemicals Co., Ltd.) | 6.0 parts |
| · Ion-exchanged water | 263.7 parts |

(Preparation of basic solution B (second liquid))

A composition shown below was mixed and stirred, and a basic solution B was obtained.

| | |
|---|---|
| (1) Boric acid | 0.65 parts |
| (2) Zirconium ammonium carbonate<br>(trade name: ZIRCOSOL AC-7 (13% aqueous solution), manufactured by Daiichi Kigenso Kagaku Kogyo Co., Ltd.) | 2.5 parts |
| (3) Ammonium carbonate<br>(extra pure class; manufactured by Kanto Chemical Co., Inc.) | 4.0 parts |
| (4) Ion-exchanged water | 92.85 parts |
| (5) Polyoxyethylene isodecyl ether<br>(trade name: NOIGEN SD-70, manufactured by Dai-Ichi Kogyo Seiyaku Co., Ltd.) | 0.6 parts |

(Preparation of polyvalent salt solution C for in-line blending)

A composition shown below was mixed and stirred, and thus a polyvalent salt solution C for in-line blending was obtained.

| | |
|---|---|
| (1) ALFINE 83<br>(trade name, manufactured by Taimei Chemicals Co., Ltd.) | 20.0 parts |
| (2) NOIGEN SD-60<br>(trade name, manufactured by Dai-Ichi Kogyo Seiyaku Co., Ltd.; polyoxyethylene isodecyl ether) | 4.4 parts |
| (3) Ion-exchanged water | 75.6 parts |

(Production of sheet for inkjet recording)

The front surface of the support was subjected to a corona discharge treatment, subsequently a coating liquid A-2 for ink receiving layer was prepared by in-line mixing the coating liquid A for ink receiving layer (first liquid), which was allowed to flow to obtain an amount of application of 173 ml/$m^2$, with the polyvalent metal salt solution for in-line blending at a rate of 10.8 ml/$m^2$, and the coating liquid A-2 was applied on the front surface. Thereafter, the coating liquid was dried in a hot air dryer at 80°C (air speed 3 to 8 m/sec) until the solids concentration of the coating layer reached 20%. This coating layer exhibited constant rate drying before this point. Thereafter, before the coating layer

exhibited decreasing rate drying, the support was immersed in the basic solution B (second liquid) for 3 seconds to adhere the basic solution on the coating layer in an amount of 13 g/$m^2$, and the basic solution was further dried for 10 minutes at 80°C (curing step). Thereby, a sheet for inkjet recording provided with an ink receiving layer having a dried film thickness of 32 μm was produced.

The particle diameter of the inorganic fine particles of the ink receiving layer measured with the following method is 20 nm.

<Production of ink>

(Production of magenta ink)

Deionized water was added to the following components, the mixture was adjusted to one liter, and then the mixture was stirred for one hour while heated at around 30°C to 40°C. Thereafter, the pH was adjusted to pH=9 with 10 mol/L of KOH, and the mixture was filtered under reduced pressure through a microfilter having an average pore size of 0.25 μm. Thus, a magenta ink M-101 was produced.

| | |
|---|---|
| · Dye M-1 (see below) | 35.0g |
| · 1,5-Pentanediol | 50.0 g |
| · 2-Pyrrolidone | 50.0 g |
| · Ethylene glycol | 72.4 g |
| · Urea | 19.0g |
| · PROXEL XL2 | 1.1 g |
| (trade name, manufactured by Avecia Biologics, Ltd.) | |

Compound M-1

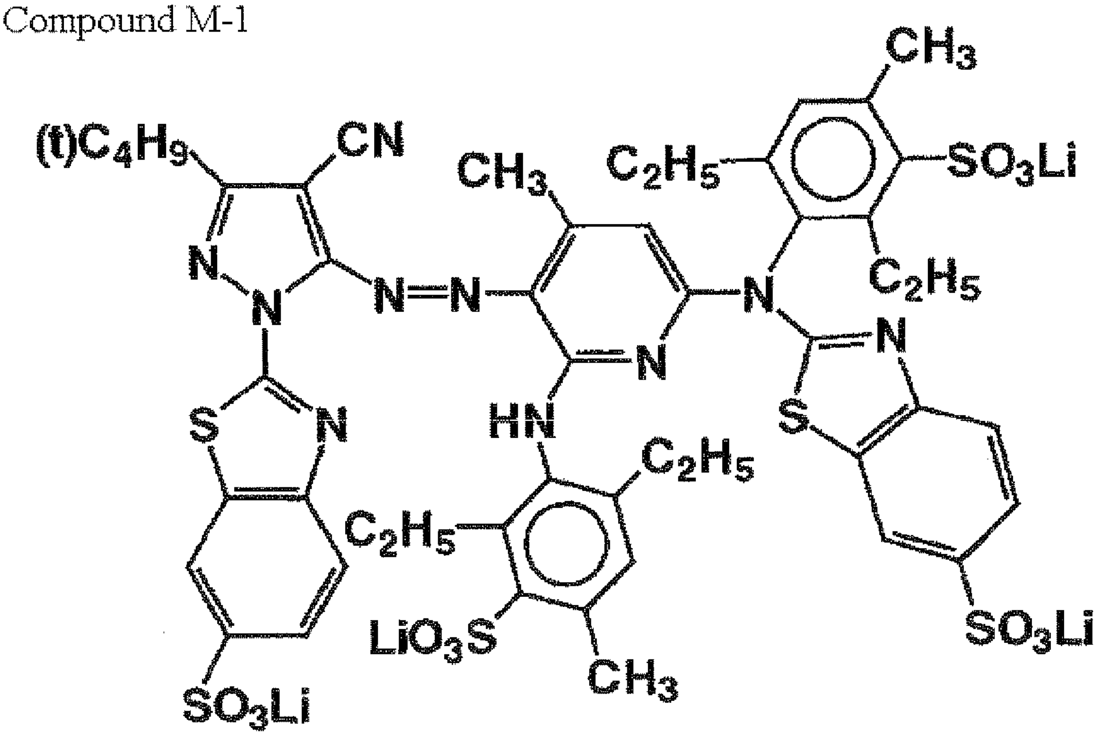

<Performance evaluation>

(Measurement of pore median diameter of ink receiving layer)

A water-soluble organic solvent (indicated in Table 1) was diluted with water such that the amount of application of the water-soluble organic solvent was 6.6 g/$m^2$. The dilution was applied on the sheet for inkjet recording using a bar coater.
The sheet for inkjet recording after application and the sheet for inkjet recording before application were stored for 24 hours in an environment of 25°C and 50% RH, and were respectively cut to a size of 20 x 100 mm. Measurement of the pore size distribution (pore median diameter before application: L2, pore median diameter after application: L3) was carried out using 9220 (trade name, manufactured by Shimadzu Autopore Corp.) at an initial air pressure of about 20 kPa. Furthermore, measurement of the pore size distribution was carried out in the same manner with the support only, which did not have the ink receiving layer applied thereon (pore median diameter of support: L1). As shown in the following formula, the change ratio (%) of the pore median diameter of the ink receiving layer was determined by subtracting from the pore size distribution of the sheet for inkjet recording. The results thus obtained are presented in Table 1.

$$\text{Change ratio of pore median diameter of ink receiving layer (\%)} = ((L3 - L1)/(L2 - L1)) \times 100 - 100$$

(Measurement of particle size of inorganic fine particles of ink receiving layer)

The ink receiving layer surface was observed with an electron microscope (trade name: S-4700, manufactured by Hitachi High-Technologies Corp.) at an accelerating voltage of 10 kV. For 100 inorganic fine particles at any locations of the surface, the respective projected areas were determined, and the particle size of individual particles was determined by assuming a circle having the same area as the projected area and determining the diameter of the circle. Thereby, a simple mean value of the particle sizes of the 100 inorganic fine particles was determined as the particle diameter of each of the inorganic fine particles.

(Measurement of density)

The sheet for inkjet recording obtained as described above was stored for one day in an environment of 25°C and 50% RH, and then a solid image of magenta color was printed on its ink receiving layer using a printer (trade name: MP950, manufactured by Canon, Inc.) loaded with the magenta ink, under the same environment and under the setting of "no color correction" for color adjustment. The printed sheet for inkjet recording was stored for 24 hours in the same environment.
After the storage, the magenta color density was measured with X-RITE 310 (tirade name, manufactured by X-Rite, Inc.), and the color density was evaluated according to the following evaluation criteria. The results thus obtained are presented in Table 1.

<Evaluation criteria>

A: The density is 2.6 or higher.
B: The density is equal to or higher than 2.5 and lower than 2.6.
C: The density is equal to or higher than 2.4 and lower than 2.5.
D: The density is lower than 2.4.

(Measurement of color change)

The sheet for inkjet recording obtained as described above was stored for one day in an environment of 25°C and 50% RH, and then on its ink receiving layer, a solid image of magenta color was printed using a printer (trade name: MP950, manufactured by Canon, Inc.) loaded with the magenta ink, under the same environment with the magenta color density adjusted to 1.5.
Here, the measurement of color was carried out by measuring the values of L*a*b* using a spectrophotometer (trade name: SPECTROLINO, manufactured by GretagMacbeth LLC), under the conditions of a light source of F8 and a viewing

angle of 2 degrees.
Discoloration was evaluated from the color difference (ΔE) thus obtained, according to the following evaluation criteria. The results thus obtained are presented in Table 1.
**[0175]** - Evaluation criteria -

A ··· $\Delta E < 1$ : Discoloration is almost not recognizable.
B ··· $1 \leq \Delta E < 2$ : Discoloration is recognizable but not so conspicuous.
C ··· $2 \leq \Delta E < 4$ : Discoloration is quite conspicuous but at an acceptable level.
D ··· $4 \leq \Delta E$ : Discoloration is at a significantly problematic level.

[Examples 2 to 20]

Magenta inks were prepared in the same manner as in Example 1, except that ethylene glycol used in Example 1 was changed to the water-soluble organic solvent indicated in Table 1. Printing was performed, and the images were evaluated.
Here, the abbreviations in the column for water-soluble organic solvent in Table 1 and Table 2 are as follow.
EGMME: Ethylene glycol monomethyl ether
EGDME: Ethylene glycol dimethyl ether
PGMME: Propylene glycol monomethyl ether
DEGMME: Diethylene glycol monomethyl ether
DEGMBE: Diethylene glycol monobutyl ether
DEGDME: Diethylene glycol dimethyl ether
DPGMME: Dipropylene glycol monoethyl ether
DPGMBE: Dipropylene glycol monobutyl ether
TEGDME: Triethylene glycol dimethyl ether
EGMMEA: Ethylene glycol monomethyl ether acetate
TEGMBE: Triethylene glycol monobutyl ether

(Example 21)

A magenta ink was prepared in the same manner as in Example 8, except that the composition of the magenta ink used in Example 8 was changed as follows. Printing was performed, and the images were evaluated.

| | |
|---|---|
| · Dye M-1 (see above) | 35.0 g |
| · 1,5-Pentanediol | 34.5 g |
| · 2-Pyrrolidone | 34.5 g |
| · DEGMBE | 103.4 g |
| · Urea | 19.0 g |
| · PROXEL XL2 | 1.1 g |
| (trade name, manufactured by Avecia Biologics, Ltd.) | |

(Example 22)

A magenta ink was prepared in the same manner as in Example 8, except that the composition of the magenta ink used in Example 8 was changed as follows. Printing was performed, and the images were evaluated.

| | |
|---|---|
| · Dye M-1 (see above) | 35.0 g |
| · 1,5-Pentanediol | 21.6 g |
| · 2-Pyrrolidone | 21.6 g |
| · DEGMBE | 129.3 g |
| · Urea | 19.0 g |
| · PROXEL XL2 | 1.1 g |
| (trade name, manufactured by Avecia Biologics, Ltd.) | |

(Example 23)

A magenta ink was prepared in the same manner as in Example 8, except that the composition of the magenta ink used in Example 8 was changed as follows. Printing was performed, and the images were evaluated.

| | |
|---|---|
| · Dye M-1 (see above) | 35.0 g |
| · 1,5-Pentanediol | 12.9 g |
| · 2-Pyrrolidone | 12.9 g |
| · DEGMBE | 146.5 g |
| · Urea | 19.0 g |
| · PROXEL XL2 | 1.1 g |
| (trade name, manufactured by Avecia Biologics, Ltd.) | |

(Example 24)

A magenta ink was prepared in the same manner as in Example 8, except that the composition of the magenta ink used in Example 8 was changed as follows. Printing was performed, and the images were evaluated.

| | |
|---|---|
| · Dye M-1 (see above) | 35.0 g |
| · 1,5-Pentanedioi | 4.3 g |
| · 2-Pyrrolidone | 4.3 g |
| · DEGMBE | 163.8 g |
| · Urea | 19.0 g |
| · PROPEL XL2 | 1.1 g |
| (trade name, manufactured by Avecia Biologics, Ltd.) | |

(Example 25)

A sheet for inkjet recording was produced in the same manner as in Example 8, except that the polyvinyl alcohol in the ink receiving layer of the sheet for inkjet recording used in Example 8 was changed from PVA224 to PVA235 (trade name, manufactured by Kuraray Co., Ltd.; degree of saponification 88%, degree of polymerization 3500). Printing was performed in the same manner as in Example 8, except that this sheet for inkjet recording was used, and the images were evaluated.

(Example 26)

A sheet for inkjet recording was produced in the same manner as in Example 8, except that the polyvinyl alcohol in the ink receiving layer of the sheet for inkjet recording used in Example 8 was changed from PVA224 to JM-33 (trade name, manufactured by Japan Vam & Poval Co., Ltd.; degree of saponification 94.5, degree of polymerization 3300). Printing was performed in the same manner as in Example 8, except that this sheet for inkjet recording was used, and the images were evaluated.

(Example 27)

A magenta ink liquid was prepared in the same manner as in Example 8, except that the magenta dye of the magenta ink used in Example 8 was changed to M-5.

M－5

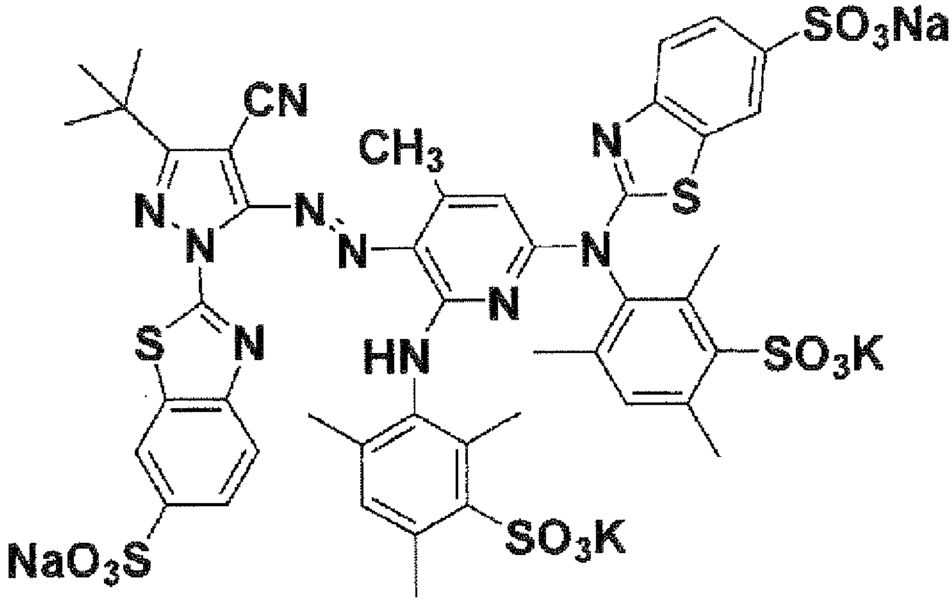

(Comparative Example 1)

A magenta ink was prepared in the same manner as in Example 8, except that the composition of the magenta ink used in Example 8 was changed as follows. Printing was performed, and the images were evaluated.

| | |
|---|---|
| · Dye M-1 (see above) | 35.0 g |
| · 1,5-Pentanediol | 55.2 g |
| · 2-Pyrrolidone | 55.2 g |
| · DEGMBE | 62.1 g |
| · Urea | 19.0 g |
| · PROXEL XL2 | 1.1 g |
| (trade name, manufactured by Avecia Biologics, Ltd.) | |

(Comparative Example 2)

A magenta ink was prepared in the same manner as in Example 8, except that the composition of the magenta ink used in Example 8 was changed as follows. Printing was performed, and the images were evaluated.

| | |
|---|---|
| · Dye M-1 (see above) | 35.0 g |
| · 1,5-Pentanediol | 61.2 g |
| · 2-Pyrrolidone | 61.2 g |
| · DEGMBE | 50.0 g |
| · Urea | 19.0 g |
| · PROXEL XL2 | 1.1 g |
| (trade name, manufactured by Avecia Biologics, Ltd.) | |

(Comparative Example 3)

A magenta ink was prepared in the same manner as in Example 8, except that the composition of the magenta ink used in Example 8 was changed as follows. Printing was performed, and the images were evaluated.

| | |
|---|---|
| · Dye M-1 (see above) | 35.0 g |
| · 1,5-Pentanediol | 73.3 g |
| · 2-Pyrrolidone | 73.3 g |
| · DEGMBE | 25.9 g |
| · Urea | 19.0 g |
| · PROXEL XL2 | 1.1 g |
| (trade name, manufactured by Avecia Biologics, Ltd.) | |

(Comparative Examples 4 to 8)

Magenta inks were prepared in the same manner as in Example 8, except that DEGMBE was changed to the water-soluble organic solvents indicated in Table 1. Printing was performed, and the images were evaluated.

[Table 1]

| | Ink receiving layer | | Change ratio of pore size before and after application (%) | Dye | Water-soluble organic solvent | | Density | Color change starting immediately after printing |
|---|---|---|---|---|---|---|---|---|
| | Water-soluble resin | particle diameter of inorganic fine particles (nm) | | | Solvent | Content ratio in total amount of water-soluble organic solvents (%) | | |
| Example 1 | PVA224 | 20 | 7.5 | M-1 | Ethylene glycol | 42 | B | C |
| Example 2 | PVA224 | 20 | 7.7 | M-1 | Propylene glycol | 42 | B | B |
| Example 3 | PVA224 | 20 | 7.7 | M-1 | 1,2-Butanediol | 42 | B | B |
| Example 4 | PVA224 | 20 | 7.8 | M-1 | 1,2-Pentanediol | 42 | B | B |
| Example 5 | PVA224 | 20 | 8.1 | M-1 | 1,2-Hexanediol | 42 | B | B |
| Example 6 | PVA224 | 20 | 5.2 | M-1 | EGMME | 42 | A | B |
| Example 7 | PVA224 | 20 | 5.1 | M-1 | EGDME | 42 | A | B |
| Example 8 | PVA224 | 20 | 5.3 | M-1 | PGMME | 42 | A | B |
| Example 9 | PVA224 | 20 | 7.3 | M-1 | DEGMBE | 42 | B | B |
| Example 10 | PVA224 | 20 | 7.5 | M-1 | DEGMME | 42 | B | B |
| Example 11 | PVA224 | 20 | 6.5 | M-1 | DEGDME | 42 | A | B |
| Example 12 | PVA224 | 20 | 7.4 | M-1 | DPGMME | 42 | B | B |
| Example 13 | PVA224 | 20 | 7.5 | M-1 | DPGMBE | 42 | B | B |
| Example 14 | PVA224 | 20 | 5.7 | M-1 | TEGDME | 42 | A | B |
| Example 15 | PVA224 | 20 | 11.2 | M-1 | EGMMEA | 42 | C | B |
| Example 16 | PVA224 | 20 | 12.5 | M-1 | Dimethyl sulfoxide | 42 | C | B |
| Example 17 | PVA224 | 20 | 11.7 | M-1 | Morpho line | 42 | C | B |
| Example 18 | PVA224 | 20 | 7.5 | M-1 | DEGMBE+DEGMME 50%+50% | 42 | B | B |
| Example 19 | PVA224 | 20 | 7.6 | M-1 | Ethylene glycol+Propylene glycol 50%+50% | 42 | B | B |

(continued)

| | Ink receiving layer | | Change ratio of pore size before and after application (%) | Dye | Water-soluble organic solvent | | Density | Color change starting immediately after printing |
|---|---|---|---|---|---|---|---|---|
| | Water-soluble resin | particle diameter of inorganic fine particles (nm) | | | Solvent | Content ratio in total amount of water-soluble organic solvents (%) | | |
| Example 20 | PVA224 | 20 | 5.1 | M-1 | EGMME+EGDME 50%+50% | 42 | A | B |
| Example 21 | PVA224 | 20 | 7.3 | M-1 | DEGMBE | 60 | A | B |
| Example 22 | PVA224 | 20 | 7.3 | M-1 | DEGMBE | 75 | A | B |
| Example 23 | PVA224 | 20 | 7.3 | M-1 | DEGMBE | 85 | A | A |
| Example 24 | PVA224 | 20 | 7.3 | M-1 | DEGMBE | 95 | A | A |
| Example 25 | PVA235 | 21 | 7.4 | M-1 | DEGMBE | 42 | B | B |
| Example 26 | JM-33 | 21 | 7.3 | M-1 | DEGMBE | 42 | B | B |
| Example 27 | PVA224 | 20 | 7.3 | M-5 | DEGMBE | 42 | B | C |
| Comparative Example 1 | PVA224 | 20 | 7.3 | M-1 | DEGMBE | 36 | D | C |
| Comparative Example 2 | PVA224 | 20 | 7.3 | M-1 | DEGMBE | 29 | D | C |
| Comparative Example 3 | PVA224 | 20 | 7.3 | M-1 | DEGMBE | 15 | D | D |
| Comparative Example 4 | PVA224 | 20 | 30.8 | M-1 | 1,6-Hexanediol | 42 | D | C |
| Comparative Example 5 | PVA224 | 20 | 29.3 | M-1 | Triethanolamine | 42 | D | C |
| Comparative Example 6 | PVA224 | 20 | 13.8 | M-1 | TEGMBE | 42 | D | C |
| Comparative Example 7 | PVA224 | 20 | 19.5 | M-1 | Diethylene glycol | 42 | D | C |

(continued)

| | Ink receiving layer | | Change ratio of pore size before and after application (%) | Dye | Water-soluble organic solvent | | Density | Color change starting immediately after printing |
|---|---|---|---|---|---|---|---|---|
| | Water-soluble resin | particle diameter of inorganic fine particles (nm) | | | Solvent | Content ratio in total amount of water-soluble organic solvents (%) | | |
| Comparative Example 8 | PVA224 | 20 | 27.3 | M-1 | Tripropylene glycol | 42 | D | C |

As it is obvious from Table I, the Comparative Examples that do not have the constitution of the invention had low densities, and the color changes starting immediately after printing were significant.
On the other hand, the Examples having the constitution of the invention had high densities after printing and had less color change starting immediately after printing, so that the images were satisfactory.

(Examples 28 to 30 and Comparative Examples 9 to 11)

<Preparation of various color inks>

Yellow inks, cyan inks and black inks were prepared as indicated in Table 2, by varying the type of dye and the additives used in Example 2.
[Table 2]

| Ink | Y-101 | Y-102 | C-101 | C-102 | Bk-101 | Bk-102 |
|---|---|---|---|---|---|---|
| Dye | Y-1 | Y-1 | C-1 | C-1 | Bk-1:63.0 | Bk-1:63.0 |
| | 50 | 50 | 60 | 60 | Bk-2:16.0 | Bk-2:16.0 |
| 1,5-Pentanediol | 55 | 55 | 54 | 54 | 50 | 50 |
| 2-Pyrrolidone | 48 | 48 | 45 | 45 | 12 | 12 |
| DEGMBE | 74.6 | - | 71.7 | - | 50 | - |
| TEGMBE | - | 74.6 | - | 71.7 | - | 50 |
| Urea | 19 | 19 | 24 | 24 | 90 | 90 |
| PROXEL-XL2 | 1.1 | 1.1 | 1.1 | 1.1 | 1.1 | 1.1 |
| | | | | | | (g/l) |

The structure of the dyes shown in Table 2 are as follows.
Compound Y-1

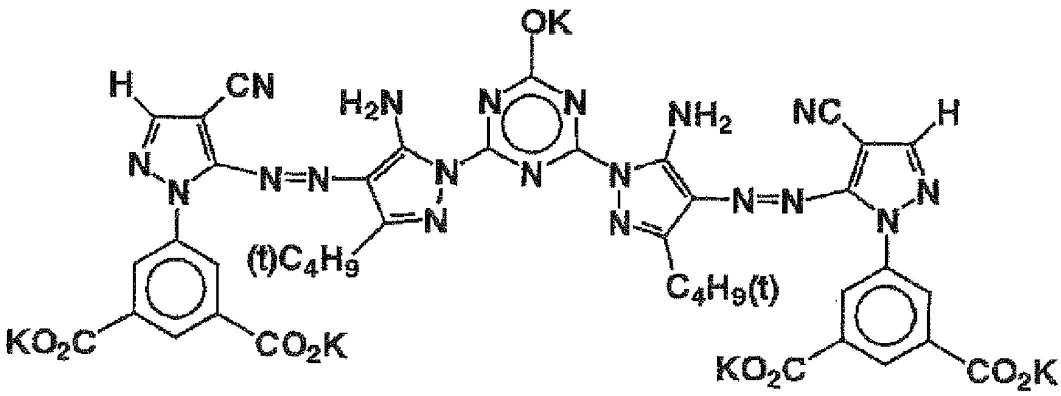

C-1 Oxidation Potential : 1. 11 V vs SCE

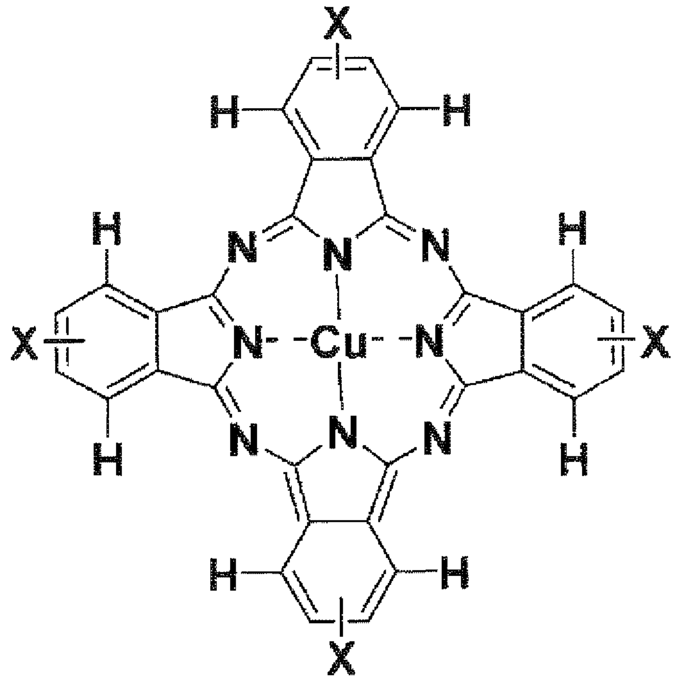

X: $SO_2(CH_2)_3SO_3Li$ (3/4)
$SO_2(CH_2)_3SO_2NHCH_2CH(CH_3)OH$ (1/4)

Compound Bk-1

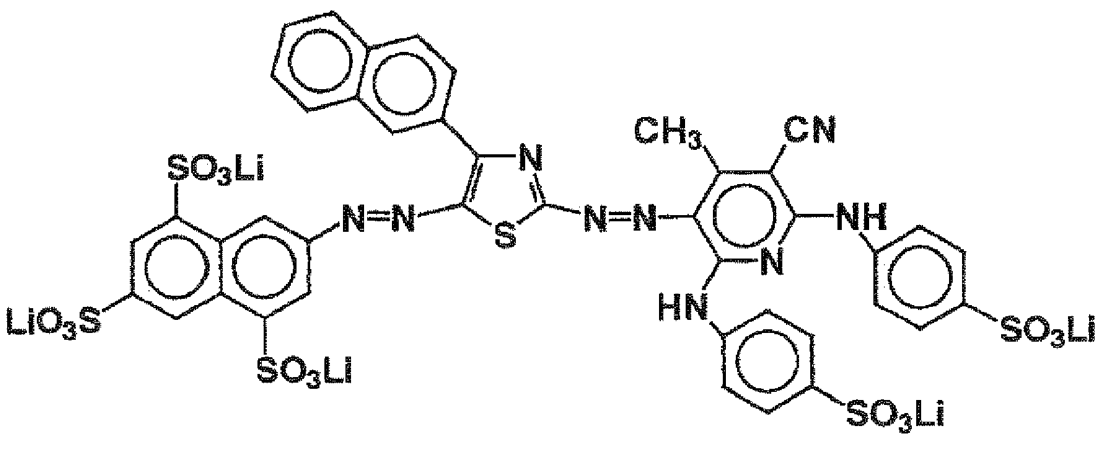

Compound Bk-2

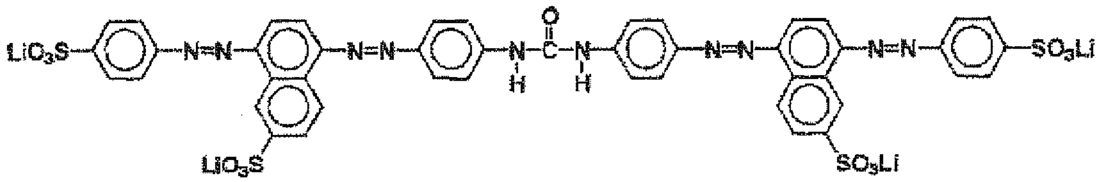

<Printing and performance evaluation of yellow images, cyan images and black images>

Solid images of yellow, cyan and black colors were respectively printed in the same manner as in Example 2, except that the magenta ink used in Example 2 was changed to the yellow ink Y-101 or Y-102, cyan ink C-101 or C-102, or black ink Bk-101 or Bk-102. Performance evaluation was carried out.

[Table 3]

| | Water-soluble resin of ink receiving layer | Change ratio of pore size before and after application (%) | Ink | Water-soluble organic solvent | | Density | Color change starting immediately after printing |
|---|---|---|---|---|---|---|---|
| | | | | Solvent | Content ratio of total amount of water-soluble organic solvents (%) | | |
| Example 28 | PVA224 | 7.3 | Y-101 | DEGMBE | 42 | B | B |
| Example 29 | PVA224 | 7.3 | C-101 | DEGMBE | 42 | B | B |
| Example 30 | PVA224 | 7.3 | Bk-101 | DEGMBE | 43 | B | B |
| Comparative Example 9 | PVA224 | 13.8 | Y-102 | TEGMBE | 42 | D | C |
| Comparative Example 10 | PVA224 | 13.5 | C-102 | TEGMBE | 42 | D | C |
| Comparative Example 11 | PVA224 | 13.8 | Bk-102 | TEGMBE | 43 | D | C |

As it is obvious from Table 3, the Comparative Examples that do not have the constitution of the invention had low densities, and the color changes starting immediately after printing were significant.
On the other hand, the Examples having the constitution of the invention had high densities after printing and had less color change starting immediately after printing, so that the images were satisfactory.

## Claims

1. An inkjet recording method, comprising: performing recording on an inkjet recording medium having an ink receiving layer, on a support, the ink receiving layer including at least inorganic fine particles, a water-soluble resin and a crosslinking agent, using an ink including at least a dye, water and a water-soluble organic solvent, wherein, in the ink, a content of water-soluble organic solvent, which gives a change ratio of a pore median diameter of the ink receiving layer of 13.0% or less when measured by a mercury intrusion method before and after the water-soluble

organic solvent is applied at 6.6 $g/m^2$ to the ink receiving layer, is 40% by mass or greater relative to a total amount of water-soluble organic solvents.

**2.** The inkjet recording method of claim 1, wherein a particle diameter of the inorganic fine particles of the ink receiving layer measured with an electron microscope is from 5 nm to 45 nm.

**3.** The inkjet recording method of claim 1, wherein the water-soluble resin is polyvinyl alcohol.

**4.** The inkjet recording method of claim 1, wherein the water-soluble organic solvent in the ink is at least one selected from ethylene glycol monoalkyl ether, diethylene glycol monoalkyl ether, propylene glycol monoalkyl ether, dipropylene glycol monoalkyl ether, 1,2-alkyldiol, ethylene glycol dialkyl ether, diethylene glycol dialkyl ether, triethylene glycol dialkyl ether, propylene glycol dialkyl ether, dipropylene glycol dialkyl ether, and tripropylene glycol dialkyl ether.

**INTERNATIONAL SEARCH REPORT**

International application No. PCT/JP2009/062227

A. CLASSIFICATION OF SUBJECT MATTER
*B41M5/00*(2006.01)i, *B41J2/01*(2006.01)i, *B41M5/50*(2006.01)i, *B41M5/52*(2006.01)i

According to International Patent Classification (IPC) or to both national classification and IPC

B. FIELDS SEARCHED

Minimum documentation searched (classification system followed by classification symbols)
B41M5/00, B41J2/01, B41M5/50, B41M5/52

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2005-263834 A (Konica Minolta Holdings, Inc.), 29 September, 2005 (29.09.05), Par. Nos. [0089] to [0126] (Family: none) | 1-4 |
| X | JP 11-20300 A (Konica Corp.), 26 January, 1999 (26.01.99), Par. Nos. [0111] to [0136] & US 6217166 B1 & EP 888904 A1 & DE 69800611 D | 1-4 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 23 July, 2009 (23.07.09) | 04 August, 2009 (04.08.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000247022 A
- JP 2006181954 A
- JP 2005336489 A
- WO 200283795 PCT
- WO 200283662 A
- JP 2004149560 A
- JP 2004149561 A
- WO 200260994 A
- WO 2003811 A
- WO 200362324 A
- JP 2003213167 A
- JP 2004075986 A
- JP 2004323605 A
- JP 2004315758 A
- JP 2004315807 A
- JP 2005179469 A
- JP 2005307177 A
- WO 2005075573 A
- JP 2004083903 A
- JP 2003277661 A
- JP 2003277262 A
- JP 2003128953 A
- JP 2003041160 A
- US 20030213405 A
- JP 2007191650 A
- US 3017280 A
- US 2983611 A
- US 3100704 A
- JP 48028325 A
- JP 54074430 A
- JP 54124726 A
- JP 55022766 A
- JP 55142339 A
- JP 60023850 A
- JP 60023851 A
- JP 60023852 A
- JP 60023853 A
- JP 60057836 A
- JP 60060643 A
- JP 60118834 A
- JP 60122940 A
- JP 60122941 A
- JP 60122942 A
- JP 60235134 A
- JP 1161236 A
- US 2484430 A
- US 2548564 A
- US 3148061 A
- US 3309690 A
- US 4115124 A
- US 4124386 A
- US 4193800 A
- US 4273853 A
- US 4282305 A
- US 4450224 A
- JP 10081064 A
- JP 10119423 A
- JP 10157277 A
- JP 10217601 A
- JP 11348409 A
- JP 2001138621 A
- JP 2000043401 A
- JP 2000211235 A
- JP 2000309157 A
- JP 2001096897 A
- JP 2001138627 A
- JP 11091242 A
- JP 8002087 A
- JP 8002090 A
- JP 8002091 A
- JP 8002093 A
- JP 8174992 A
- JP 11192777 A
- JP 2001301314 A
- JP 47010537 A
- JP 58111942 A
- JP 58212844 A
- JP 59019945 A
- JP 59046646 A
- JP 59109055 A
- JP 63053544 A
- JP 3610466 B
- JP 4226187 B
- JP 48030492 B
- JP 48031255 B
- JP 48041572 B
- JP 48054965 B
- JP 50010726 B
- US 2719086 A
- US 3707375 A
- US 3754919 A
- US 4220711 A
- JP 454699 B
- JP 54005324 B
- EP 223739 A
- EP 309401 A
- EP 309402 A
- EP 310551 A

- EP 310552 A
- EP 459416 A
- DE 3435443
- JP 54048535 A
- JP 60107384 A
- JP 60107383 A
- JP 60125470 A
- JP 60125471 A
- JP 60125472 A
- JP 60287485 A
- JP 60287486 A
- JP 60287487 A
- JP 60287488 A
- JP 61360287 A
- JP 61185483 A
- JP 61211079 A
- JP 62146678 A
- JP 62146680 A
- JP 62146679 A
- JP 62282885 A
- JP 62262047 A
- JP 63051174 A
- JP 63089877 A
- JP 63088380 A
- JP 6688381 A
- JP 63113536 A
- JP 63163351 A
- JP 63203372 A
- JP 63224989 A
- JP 63251282 A
- JP 63267594 A
- JP 63182484 A
- JP 1239282 A
- JP 2262654 A
- JP 2071262 A
- JP 3121449 A
- JP 4291685 A
- JP 4291684 A
- JP 5061166 A
- JP 5119449 A
- JP 5188687 A
- JP 5188686 A
- JP 5110490 A
- JP 51108437 A
- JP 5170361 A
- JP 48043295 B
- JP 48033212 B
- US 4814262 A
- US 4980275 A
- JP 62245258 A
- JP 621316648 A
- JP 62110066 A